# EUROPEAN PATENT SPECIFICATION

(11) **EP 1 642 931 B1**
(45) Date of publication and mention of the grant of the patent: **05.10.2011**
(21) Application number: 04747177.6
(22) Date of filing: 08.07.2004
(51) Int. Cl.: C08L 23/10, C08L 23/26, C08L 51/06, C08F 8/00, C08F 255/02

(54) **EMULSION COMPOSITION OF MODIFIED POLYPROPYLENE**
EMULSIONSZUSAMMENSETZUNG VON MODIFIZIERTEM POLYPROPYLEN
COMPOSITION D'EMULSION DE POLYPROPYLENE MODIFIE

(30) Priority: 08.07.2003 JP 2003193709
(43) Date of publication of application: 05.04.2006
(73) Proprietor: Tonen Chemical Corporation, Minato-Ku, Tokyo 105-8572 (JP)
(72) Inventor: OZAKI, Hiroyuki, Kawasaki-shi, Kanagawa 2110045 (JP); HORII, Masatoshi, 1430016 (JP); NISHIDA, Mitsuhiro, Yokohama-shi, Kanagawa 2240023 (JP); WAKABAYASHI, Hideaki, Yokohama-shi, Kanagawa 2240023 (JP); IMANISHI, Kunihiko, 2270048 (JP); UEKI, Satoshi, 1430023 (JP); SUZUKI, Sadakatsu, Kawaguchi-shi, Saitama 3320015 (JP)
(74) Representative: Moinas, Michel
(86) International application number: PCT/JP2004/009708
(87) International publication number: WO 2005/003229

(56) References cited:
- EP-A- 1 375 543
- EP-A1- 1 500 680
- EP-A2- 0 457 291
- WO-A-2004/031246
- JP-A- 5 059 236
- JP-A- 6 025 364
- JP-A- 8 176 374
- JP-A- 2003 238 619
- JP-A- 2004 035 623
- JP-A- 2004 115 712
- US-A- 4 240 944
- US-A- 5 491 191
- US-B1- 6 455 614

## Description

### BACKGROUND OF THE INVENTION

The present invention relates to an emulsion composition of modified polypropylene, more specifically an emulsion composition of modified polypropylene drastically improved in emulsion stability by use of modified polypropylene which is highly soluble in a solvent and can be easily emulsified.

### DESCRIPTION OF THE PRIOR ART

Recently, use of modified polypropylene has been extensively studied not only for paints but also for other products, e.g., surface modifiers, primers, coating agents, inks, adhesives, solubilizers and intermediates therefor. Therefore, stable polymer solutions are in demand.

Conventional polypropylene is soluble in a solvent to a limited extent, because of its high stereoregularity. When it is to be emulsified, the polymer solution should be kept at a low concentration to have a stable emulsion. Therefore, a large quantity of the solvent should be distilled away in the final stage of the emulsification process, which pushes up the production cost. Use of a polypropylene solution of higher concentration, attempted to avoid the increased cost, involves problems resulting from insufficient dispersion of polypropylene. One of the proposals to increase polypropylene solubility in an organic solvent is chlorination of polypropylene (refer to JP-A-1-256556 (claims)). This, however, involves problems of difficulty in abating environmental loads, because of its chlorine content.

One of the methods for emulsifying polypropylene first modifies polypropylene, then disperses and emulsifies modified polypropylene in water, and distills the solvent away. This emulsification method, however, cannot solve the above problems when modified polypropylene is highly crystalline, because of its limited solubility in an organic solvent. Another method emulsifies modified polypropylene having crystallinity while it is kept molten. This needs heating polypropylene to a high temperature to keep it molten, which may deteriorate polypropylene and exert negative effects on product characteristics.

Still another method proposed a radical reaction of polypropylene dispersed in water with a modifier monomer (refer to, e.g., JP-A-6-80844 (claims)). This method involves problems resulting from homopolymers of the modifier monomer massively produced in water to deteriorate production efficiency.

### SUMMARY OF THE INVENTION

It is an object of the present invention to provide an emulsion composition of modified polypropylene drastically improved in emulsion stability by use of modified polypropylene which is highly soluble in a solvent and can be easily emulsified, in consideration of the above situations.

The inventors of the present invention have found, after having extensively studied to achieve the above object, that a modified polypropylene having a racemic diad fraction [r] in a specific range can solve the above problems, when modified with a hydrophilic functional group introduced therein to a given content, because it is highly soluble in an organic solvent to allow the solution of high concentration to be emulsified and facilitate removal of the solvent by distillation from the emulsification effluent, achieving the present invention.

The first aspect of the present invention is an emulsion composition of modified polypropylene dispersed and emulsified in water, wherein the modified polypropylene is composed of polypropylene having a racemic diad fraction [r] of 0.12 to 0.88 and containing 0.5 or more hydrophilic functional groups on the average per one molecular chain of the polypropylene.

The second aspect of the present invention is the emulsion composition of modified polypropylene of the first aspect, wherein the polypropylene is soluble having a solubility of 5 g or more in toluene at normal temperature.

The preferred embodiments of the present invention include the following:
(1) The emulsion composition of modified polypropylene according to the first aspect, wherein the polypropylene has a racemic diad fraction [r] of 0.51 to 0.88.
(2) The emulsion composition of modified polypropylene according to the first aspect, wherein the modified polypropylene contains at least one hydrophilic functional group on the average per one molecular chain of the polypropylene.
(3) The emulsion composition (2) of modified polypropylene, wherein the hydrophilic functional group in the modified polypropylene is at least one species selected from the group consisting of OH, PO(OH), COOH, NR₂ (R is H or an alkyl group of 1 to 10 carbon atoms), CN, SO₃H, SO₃M (M is an alkali metal), COOM and OCOR (R is the same as the above).
(4) The emulsion composition (2) of modified polypropylene, wherein the hydrophilic functional group in the modified polypropylene is at least one species selected from the group consisting of COOH, SO₃H and SO₃M (M is an alkali metal).
(5) The emulsion composition (2) of modified polypropylene, wherein the polypropylene has a solubility of 10 g or more in toluene at normal temperature.
(6) The emulsion composition (5) of modified polypropylene, wherein the polypropylene has a solubility of 15 g or more in toluene at normal temperature.
(7) The emulsion composition (1) or (2) of modified polypropylene, wherein the polypropylene shows no absorption peak derived from the crystal segment of the polypropylene, observed by IR analysis carried out at normal temperature.
(8) The emulsion composition (7) of modified polypropylene, wherein the polypropylene shows absorption peaks at 973, 962 and 977 cm⁻¹.
(9) The emulsion composition (7) or (8) of modified polypropylene, wherein the polypropylene shows no absorption peaks derived from the crystal segment of the polypropylene at 770, 842, 870, 998 and 1022 cm⁻¹.
(10) A method for producing the emulsion composition of modified polypropylene of the first or second aspect of the present invention, comprising radical reaction of polypropylene, produced by polymerization in the presence of a metal complex catalyst, with a modifier monomer containing a hydrophilic functional group, and dispersing and emulsifying the resulting modified polypropylene in water.
(11) A method for producing the emulsion composition of modified polypropylene of the first or second aspect of the present invention, comprising copolymerization of propylene in the presence of a metal complex catalyst with a modifier monomer whose hydrophilic functional group is protected by a protective group, and dispersing and emulsifying the resulting modified polypropylene in water.
(12) The method (10) or (11) for producing the emulsion composition of modified polypropylene, wherein the metal complex catalyst comprises a vanadium complex and organoaluminum compound.
(13) The method (10) or (11) for producing the emulsion composition of modified polypropylene, wherein the modified polypropylene is dispersed and emulsified in water after its hydrophilic group is neutralized and/or saponified.
(14) An adhesive agent, ink, paint, primer, sealant, surface modifier, coating agent or tackifier which contains the emulsion composition of modified polypropylene of the first or second aspect of the present invention.

The emulsion composition of modified polypropylene of the present invention can be easily emulsified even when a modified polypropylene solution of high concentration is used, because the modified polypropylene has a racemic diad fraction [r] in a specific range and contains 0.5 or more hydrophilic functional groups on the average per one molecular chain of the modified polypropylene. As a result, the emulsion composition of modified polypropylene can be efficiently produced, because the solvent can be easily removed from the emulsification effluent by distillation.

### DETAILED DESCRIPTION OF THE INVENTION

The emulsion composition of modified polypropylene of the present invention and method for producing the same are described in detail for each item.

### 1. Production of polypropylene

In the present invention, the method for producing polypropylene which serves as the base for the modified polypropylene is not limited, so long as it gives a polypropylene having a racemic diad fraction [r] in a range from 0.12 to 0.88. It is normally produced by polymerization of propylene in the presence of a homogeneous metallic complex catalyst in a solvent, e.g., benzene, toluene, xylene, butane, pentane, hexane, cyclohexane, heptane, ethylcyclohexane or THF.

The homogeneous metallic complex catalyst is a catalyst composed of an organometallic compound and organoaluminum compound, or a metal complex comprising an organic compound containing a hetero atom (e.g., oxygen or nitrogen) and transition metal. These catalysts include:
(i) a catalyst composed of a vanadium complex and organoaluminum compound,
(ii) a catalyst composed of a compound having one cycloalkadienyl group (including a derivative thereof) of a metal selected from the group consisting of titanium, zirconium and hafnium, and at least one alkoxy or alkylamino group; and an aluminoxane, boron compound or organoaluminum compound,
(iii) a catalyst composed of a complex having two cycloalkadienyl groups (including derivatives thereof) of a metal selected from the group consisting of titanium, zirconium and hafnium, and a halogen or alkyl group; and an aluminoxane, boron compound or organoaluminum compound,
(iv) a catalyst composed of a diimine complex of nickel or palladium and an aluminoxane, and
(v) a catalyst composed of at least one complex selected from the group consisting of an alkoxy complex, alkyl amide complex and acetylacetone complex of Ti, Zr or Hf, and an aluminoxane, boron compound or organoaluminum compound.

Some of the vanadium complexes useful for the catalysts (i) composed of a vanadium complex and organoaluminum compound are described in Makromol. Chem., 180, 57-64 (1979).

More specifically, they include VOCl₃, VCl₄, V(acetylacetonate)₃, V(2-methyl-1,3-butanedionate)₃, V(1,3-butanedionate)₃, VO(acetylacetonate)₂, VOCl₂(acetylacetonate), VOCl(acetylacetonate)₂ and VO(OR)₃. The other complexes include the vanadium compounds with a ligand, e.g., alkyl imide or arylimide, represented by the general formula (1) or (2).

The organoaluminum compounds include alkyl aluminum halides, e.g., dimethyl aluminum chloride, diethyl aluminum chloride, diethyl aluminum bromide, diethyl aluminum iodide, diisobutyl aluminum chloride, ethyl aluminum sesquichloride, ethyl aluminum dichloride and isobutyl aluminum dichloride; and aluminoxanes, e.g., methyl aluminoxane.

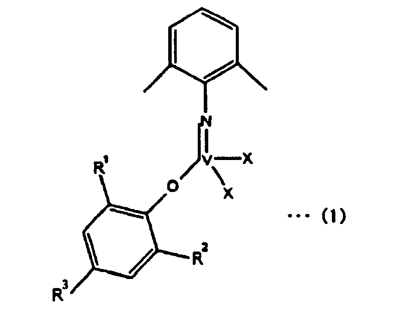

In the general formula (1), X is F, Cl, Br, I, a hydrocarbon group of 1 to 10 carbon atoms, or alkoxy group of 1 to 8 carbon atoms; R¹ to R³ are each an alkyl group of 1 to 4 carbon atoms.

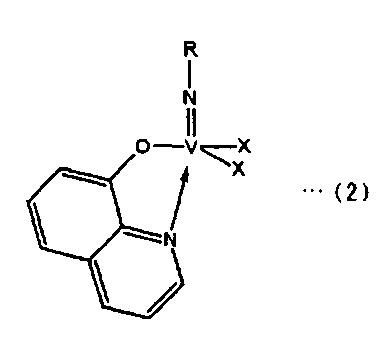

In the general formula (2), X is F, Cl, Br, I, a hydrocarbon group of 1 to 10 carbon atoms, or alkoxy group of 1 to 8 carbon atoms; R is an alkyl group of 1 to 4 carbon atoms.

In the catalyst, the vanadium complex is incorporated at 1 × 10⁻⁵ to 0.1 mols, preferably 1 × 10⁻⁴ to 5 × 10⁻² mols, and organoaluminum compound at 1 × 10⁻⁴ to 0.1 mols, preferably 5 × 10⁻³ to 0.05 mols, each per mol of propylene.

The catalyst (i) may be incorporated, as required, with an electron donor. The electron donors include oxygen-containing ones, e.g., alcohols, phenols, ketones, aldehydes, carboxylic acid, malonic acid, esters of an organic or inorganic acid, monoethers, diethers and polyethers; and nitrogen-containing ones, e.g., ammonia, amines, nitriles and isocyanate. The electron donor is incorporated at 0.01 to 20 mols per mol of the vanadium complex.

The polymerization is carried out at -100 to 100°C for 0.5 to 50 hours, preferably at -90 to 50°C for 1 to 30 hours, more preferably at -80 to 30°C for 1 to 15 hours. Molecular weight, molecular weight distribution and production yield of thus obtained polypropylene can be controlled by controlling reaction temperature and time.

The compounds having one cycloalkadienyl group (including a derivative thereof) of a metal selected from the group consisting of titanium, zirconium and hafnium, and at least one alkoxy or alkylamino group for the catalyst (ii) include those represented by one of the general formulae (3) to (5). For example, the compounds represented by the general formula (3) include CpTi(OMe)₃, CpTi(OEt)₃, CpTi(O-iPr)₃, CpTi(O-tBu)₃, CpTi(OC₆H₅)₃, CpTi(2-Me-OC₆H₄)₃, CpTi(2-Et-OC₆H₄)₃, CpTi(2-Pr-OC₆H₄)₃, CpTi(2-tBu-OC₆H₄)₃, CpTi(2,6-(MeO)₂C₆H₃)₃, CpTi(2,6-(EtO)₂C₆H₃)₃, CpTi(2,6-(iPr-O)₂C₆H₃)₃, CpTi(2,6-(t-Bu-O)₂C₆H₃)₃, CpTi(2-Me-6-tBu-OC₆H₃)₃, CpTi(3-Me-6-tBu-OC₆H₃)₃, CpTi(OMe)Cl₂, CpTi(OMe)₂Cl, CpTi(OC₆H₅)Cl₂, CpTi(OC₅H₅)₂Cl and CpTi(OMe)(OC₆H₅)Cl.

The compounds represented by the general formula (4) include (Me₂C)Cp(C₆H₄)OTiCl₂, ((C₆H₅)₂C)Cp(C₆H₄)OTiCl₂, (Me₂C)Cp(3-Me-C₆H₃)OTiCl₂, (Me₂C)Cp(5-Me-C₆H₃)OTiCl₂, (Me2C)Cp(3-tBu-C₆H₃)OTiCl₂, (Me₂C)Cp(3,5-Me₂-C₆H₂)OTiCl₂, (Me₂C)Cp(3,5-tBu₂-C₆H₂)OTiCl₂, (Me₂C)Cp(3-Me-5-tBu-C₆H₂)OTiCl₂ and (Me₂C)Cp(3-tBu-5-Me-C₆H₂)OTiCl₂.

The compounds represented by the general formula (5) include MeNSiMe₂(Flu)TiCl₂, tBuNSiMe₂(Flu)TiCl₂, C₆H₅NSiMe₂(Flu)TiCl₂, tBuNSi(C₆H₅)₂(Flu)TiCl₂ and tBuNSiMe₂(Flu)TiMe₂.

The above examples whose Ti is substituted by Zr or Hf are also the examples useful for the present invention.

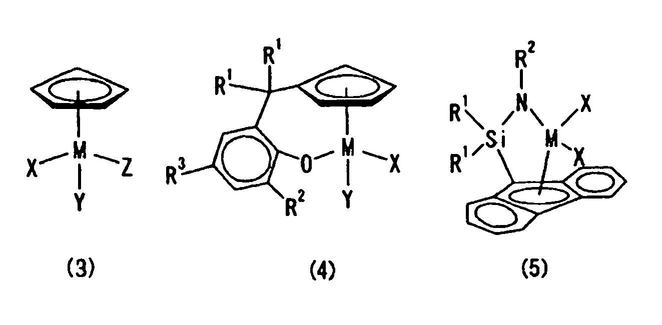

In the formulae (3) to (5), M is Ti, Zr or Hf; X, Y and Z are each a halogen selected from the group consisting of F, Cl, Br and I, aliphatic hydrocarbon group of 1 to 8 carbon atoms, alkoxy group thereof, aromatic hydrocarbon group of 6 to 14 carbon atoms or alkoxy group thereof; and R¹ to R³ are each an aliphatic hydrocarbon group of 1 to 8 carbon atoms or aromatic hydrocarbon group of 6 to 14 carbon atoms, which may be substituted, where R¹ to R³ may be the same or different and so may be X, Y and Z.

The aluminoxanes for the catalyst (ii) include methyl aluminoxane, ethyl aluminoxane, isobutyl aluminoxane, and these aluminoxanes treated to remove the unreacted aluminum compound remaining therein and refined. A boron compound, e.g., triphenyl borane, trispentafluorophenyl borane or triphenylmethyltrispentafluoroborate may be used in place of an aluminoxane, individually or in combination with an organoaluminum compound, e.g., trialkyl aluminum or alkyl aluminum halide. Moreover, an organoaluminum compound, e.g., dimethyl aluminum chloride, diethyl aluminum chloride, diethyl aluminum bromide, diisobutyl aluminum chloride or dioctyl aluminum chloride, may be also used.

The compound having one cycloalkadienyl group (including a derivative thereof) of a metal selected from the group consisting of titanium, zirconium and hafnium, and at least one alkoxy or alkylamino group for the catalyst is incorporated at 1 × 10⁻⁸ to 0.1 mols, preferably 1 × 10⁻⁷ to 5 × 10⁻² mols, and aluminoxane, boron compound or organoaluminum compound at 1 × 10⁻⁸ to 0.1 mols, preferably 1 × 10⁻⁷ to 0.05 mols, each per mol of propylene.

The polymerization is carried out at -50 to 200°C for 0.5 to 100 hours, preferably at 0 to 150°C for 1 to 50 hours.

The complex for the catalyst (iii), which composed of a complex having two cycloalkadienyl groups (including derivatives thereof) of a metal selected from the group consisting of titanium, zirconium and hafnium, and a halogen or alkyl group; and an aluminoxane, boron compound or organoaluminum compound, has two cycloalkadienyl groups (including derivatives thereof), which may be crosslinked or not.

The non-crosslinkable metallocene compounds include those represented by one of the general formulae (6) to (8).

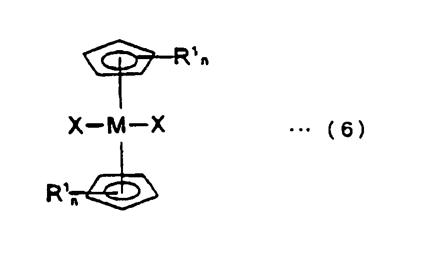

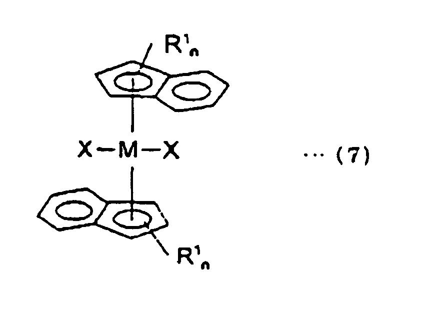

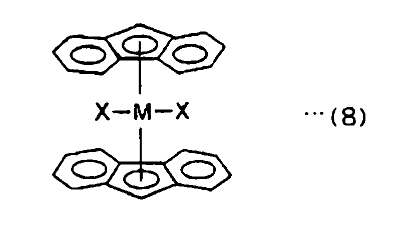

In the general formulae (6) to (8), R¹ is hydrogen atom, a substituent for an aliphatic, aromatic or alicyclic hydrocarbon group of 1 to 8 carbon atoms, or SiR₃ (R is a substituent for an alkyl, aromatic or alicyclic group of 1 to 5 carbon atoms, where Rs may be the same or different); X is a halogen atom, aliphatic hydrocarbon group of 1 to 8 carbon atoms or aromatic hydrocarbon group of 6 to 10 carbon atoms; M is a metal of Ti, Zr or Hf; and "n" is an integer of 1 to 3.

The phenyl group in the indenyl or fluorenyl group in the general formula (7) or (8) may be substituted. However, compounds which are crosslinked at one site and have a ligand, e.g., cyclopentadienyl, fluorenyl or a derivative thereof, or bisindenyl or derivative thereof, are developed for producing highly crystalline polypropylene, and are not expected to fully exhibit their effects for the present invention and are not suitable.

The metallocene compounds represented by each of the general formulae (6) to (8), which are not crosslinked, are those compounds whose cyclopentadienyl group is substituted by 1 to 4 substituents, preferably by 1 to 3 substituents. Those having no substituent or 5 substituents are not desirable, because they give atactic polypropylene only.

The specific examples of the compounds whose pentadienyl group is substituted by one substituent include (methylcyclopentadienyl)₂ZrCl₂, (methylcyclopentadienyl)₂ZrBr₂, (ethylcyclopentadienyl)₂ZrCl₂, (ethylcyclopentadienyl)₂Zr(methyl)₂, (isopropylcyclopentadienyl)₂ZrCl₂, (isopropylcyclopentadienyl)₂ZrI₂, (n-propylcyclopentadienyl)₂ZrCl₂, (n-propylcyclopentadienyl)₂Zr(phenyl)₂, (n-butylcyclopentadienyl)₂ZrCl₂, (i-butylcyclopentadienyl)₂Zr(benzyl)₂, (i-butylcyclopentadienyl)₂Zr(methyl)₂, (s-butylcyclopentadienyl)₂Zr(benzyl)₂, (t-butylcyclopentadienyl)₂ZrCl₂, (t-butylcyclopentadienyl)₂ZrBr₂, (neopentylcyclopentadienyl)₂ZrCl₂, (neopentylcyclopentadienyl)₂Zr(methyl)₂, (cyclopentylcyclopentadienyl)₂ZrCl₂, (n-hexylcyclopentadienyl)₂ZrCl₂, (n-hexylcyclopentadienyl)₂Zr(phenyl)₂, (cyclohexylcyclopentadienyl)₂ZrCl₂, (cyclohexylcyclopentadienyl)₂Zr(methyl)₂, (phenylcyclopentadienyl)₂ZrCl₂, (trimethylsilylcyclopentadienyl)₂ZrCl₂, (triphenylsilylcyclopentadienyl)₂ZrCl₂, (diphenylmethylsilylcyclopentadienyl)₂ZrCl₂, (methylcyclopentadienyl)₂HfCl₂, (methylcyclopentadienyl)₂HfBr₂, (ethylcyclopentadienyl)₂HfCl₂, (ethylcyclopentadienyl)₂Hf(methyl)₂, (isopropylcyclopentadienyl)₂HfCl₂, (isopropylcyclopentadienyl)₂Hfl₂, (n-propylcyclopentadienyl)₂HfCl₂, (n-propylcyclopentadienyl)₂Hf(phenyl)₂, (n-butylcyclopentadienyl)₂HfCl₂, (i-butylcyclopentadienyl)₂Hf(benzyl)₂, (i-butylcyclopentadienyl)₂Hf(methyl)₂, (s-butylcyclopentadienyl)₂Hf(benzyl)₂, (t-butylcyclopentadienyl)₂HfCl₂, (t-butylcyclopentadienyl)₂HfBr₂, (neopentylcyclopentadienyl)₂HfCl₂, (neopentylcyclopentadienyl)₂Hf(methyl)₂, (cyclopentylcyclopentadienyl)₂HfCl₂, (cycloentylcyclopentadienyl)₂HfCl₂, (n-hexylcyclopentadienyl)₂HfCl₂, (n-hexylcyclopentadienyl)₂Hf(phenyl)₂, (cyclohexyleyclopentadienyl)₂HfCl₂, (cyclohexylcyclopentadienyl)₂Hf(methyl)₂, (phenylcyclopentadienyl)₂HfCl₂, (trimethylsilylcyclopentadienyl)₂HfCl₂, (triphenylsilylcyclopentadienyl)₂HfCl₂, (diphenylmethylsilylcyclopentadienyl)₂HfCl₂, (methylcyclopentadienyl)₂TiCl₂, (methylcyclopentadienyl)₂TiBr₂, (ethylcyclopentadienyl)₂TiCl₂, (ethylcyclopentadienyl)₂Ti(methyl)₂, (isopropylcyclopentadienyl)₂TiCl₂, (isopropylcyclopentadienyl)₂TiI₂, (n-propylcyclopentadienyl)₂TiCl₂, (n-propylcyclopentadienyl)₂Ti(phenyl)₂, (n-butylcyclopentadienyl)₂TiCl₂, (i-butylcyclopentadienyl)₂Ti(benzyl)₂, (i-butylcyclopentadienyl)₂Ti(methyl)₂, (s-butylcyclopentadienyl)₂Ti(benzyl)₂, (t-butylcyclopentadienyl)₂TiCl₂, (t-butylcyclopentadienyl)₂TiBr₂, (neopentylcyclopentadienyl)₂TiCl₂, (neopentylcyclopentadienyl)₂Ti(methyl)₂, (cyclopentylcyclopentadienyl)₂TiCl₂, (cyclopentylcyclopentadienyl)₂TiCl₂, (n-hexylcyclopentadienyl)₂TiCl₂, (n-hexylcyclopentadienyl)₂Ti(phenyl)₂, (cyclohexylcyclopentadienyl)₂TiCl₂, (cyclohexylcyclopentadienyl)₂Ti(methyl)₂, (phenylcyclopentadienyl)₂TiCl₂, (trimethylsilylcyclopentadienyl)₂TiCl₂, (triphenylsilylcyclopentadienyl)₂TiCl₂ and (diphenylmethylsilylcyclopentadienyl)₂TiCl₂.

The specific examples of the compounds whose cyclo pentadienyl group is substituted by 2 substituents include (dimethylcyclopentadienyl)₂ZrCl₂, (dimethylcyclopentadienyl)₂ZrBr₂, (methylethylcyclopentadienyl)₂ZrI₂, (methylpropylcyclopentadienyl)₂Zr(methyl)₂, (dipropylcyclopentadienyl)₂Zr(phenyl)₂, (diphenylcyclopentadienyl)₂Zr(benzyl)₂, (indenyl)₂ZrCl₂, (dimethylcyclopentadienyl)₂HfCl₂, (dimethylcyclopentadienyl)₂HfBr₂, (methylethylcyclopentadienyl)₂Hfl₂, (methylpropylcyclopentadienyl)₂Hf(methyl)₂, (dipropylcyclopentadienyl)₂Hf(phenyl)₂, (diphenylcyclopentadienyl)₂Hf(benzyl)₂, (indenyl)₂HfCl₂, (dimethylcyclopentadienyl)₂TiCl₂, (dimethylcyclopentadienyl)₂TiBr₂, (methylethylcyclopentadienyl)₂TiI₂, (methylpropylcyclopentadienyl)₂Ti(methyl)₂, (dipropylcyclopentadienyl)₂Ti(phenyl)₂, (diphenylcyclopentadienyl)₂Ti(benzyl)₂ and (indenyl)₂TiCl₂.

The specific examples of the compounds whose cyclo pentadienyl group is substituted by 3 or 4 substituents include (trimethylcyclopentadienyl)₂ZrCl₂, (indenylmethyl)₂ZrCl₂, (tetramethylcyclopentadienyl)₂ZrCl₂, (fluorenyl)₂ZrCl₂, (trimethylcyclopentadienyl)₂HfCl₂, (indenylmethyl)₂HfCl₂, (tetramethylcyclopentadienyl)₂HfCl₂, (fluorenyl)₂HfCl₂, (trimethylcyclopentadienyl)₂TiCl₂, (indenylmethyl)₂TiCl₂, (tetramethylcyclopentadienyl)₂TiCl₂ and (fluorenyl)₂TiCl₂.

The metallocene compounds crosslinked at one site include those represented by the general formula (9):

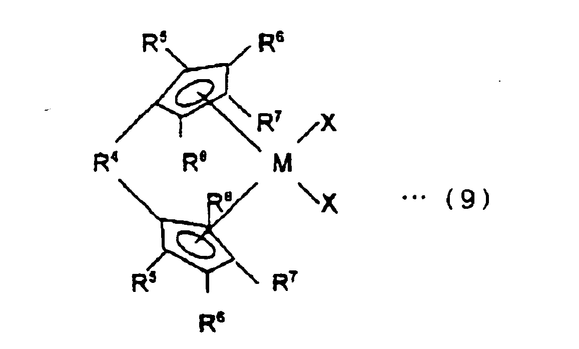

In the general formula (9), R⁴ is a divalent aromatic, alicyclic or aliphatic hydrocarbon group, or divalent group containing an element other than C or H, e.g., oxygen, nitrogen or silicon; R⁵ to R⁸ are each hydrogen atom or an aliphatic hydrocarbon group of 1 to 8 carbon atoms, where they may be the same or different, and at least one of R5 to R8 on each of the pentadienyl rings is hydrogen atom; X is a halogen, aliphatic hydrocarbon group of 1 to 8 carbon atoms or aromatic hydrocarbon group of 6 to 10 carbon atoms; and M is a metal of Ti, Zr or Hf.

The specific examples of the metallocene compounds crosslinked at one site include CH₂CH₂(methylcyclopentadienyl)₂ZrBr₂, (CH₃)₂Si(cyclopentadienyl)(dimethylcyclopentadienyl)₂ZrBr₂, (C₆H₅)C(ethylcyclopentadienyl)₂ZrCl₂, CH₂CH₂CH₂(ethylcyclopentadienyl)(trimethylcyclopentadienyl)Zr(methyl)₂, CH₂CH₂(i-propylcyclopentadienyl)₂ZrCl₂, (CH₃)₂Si(i-propylcyclopentadienyl)₂ZrI₂, (CH₃)₂Si(n-propylcyclopentadienyl)(tetramethylcyclopentadienyl)₂ZrCl₂, (CH₃)₂Si(n-propylcyclopentadienyl)₂Zr(phenyl)₂, (C₆H₅)₂Si(n-butylcyclopentadienyl)₂ZrCl₂, (CH₃)₂Si(i-butylcyclopentadienyl)₂Zr(benzyl)₂, CH₂CH₂(methylcyclopentadienyl)(i-butylcyclopentadienyl)Zr(methyl)₂, (CH₃)₂Si(s-butylcyclopentadienyl)₂Zr(benzyl)₂, (CH₃)₂Si(t-butylcyclopentadienyl)₂ZrCl₂, (CH₃)₂Si(t-butylcyclopentadienyl)₂ZrBr₂, (CH₃)₂Si(neopentylcyclopentadienyl)₂ZrCl₂, (CH₃)₂Si(neopentylcyclopentadienyl)(dimethylcyclopentadienyl)Zr(methyl)₂, (CH₃)₂Si(cyclopentylcyclopentadienyl)₂ZrCl₂, (CH₃)₂Si(cyclopentylcyclopentadienyl)₂ZrI₂, (CH₃)₂Si(n-hexylcyclopentadienyl)₂ZrCl₂, (CH₃)₂Si(n-hexylcyclopentadienyl)₂Zr(phenyl)₂, (CH₃)₂Si(cyclohexylcyclopentadienyl)₂ZrCl₂, (CH₃)₂Si(cyclohexylcyclopentadienyl)₂Zr(methyl)₂, (CH₃)₂Si(phenylcyclopentadienyl)₂ZrCl₂, (CH₃)₂Si(dimethylcyclopentadienyl)₂ZrCl₂, (CH₃)₂Si(dimethylcyclopentadienyl)₂ZrBr₂, (CH₃)₂Si(dimethylcyclopentadienyl)(diethylcyclopentadienyl)₂ZrI₂, (CH₃)₂Si(methylpropylcyclopentadienyl)₂Zr(methyl)₂, (CH₃)₂Si(dipropylcyclopentadienyl)₂Zr(phenyl)₂, (CH₃)₂Si(diphenylcyclopentadienyl)₂Zr(benzyl)₂, CH₂CH₂CH₂(indenyl)₂ZrCl₂, (CH₃)₂Si(trimethaylcyclopentadienyl)₂ZrCl₂, CH₂CH₂CH₂(indenylmethyl)₂ZrCl₂, (CH₃)₄Si₂(cyclopentadienyl)(tetramethylcyclopentadienyl)ZrCl₂, CH₂CH₂CH₂(methylcyclopentadienyl)(fluorenyl)ZrCl₂, CH₂CH₂(methylcyclopentadienyl)₂HfBr₂, (CH₃)₂Si(cyclopentadienyl)(dimethylcyclopentadienyl)₂HfBr₂, (C₆H₅)C(ethylcyclopentadienyl)₂HfCl₂, CH₂CH₂CH₂(ethylcyclopentadienyl)(trimethylcyclopentadienyl)Hf(methyl)₂, CH₂CH₂(i-propylcyclopentadienyl)₂HfCl₂, (CH₃)₂Si(i-propylcyclopentadienyl)₂Hfl₂, (CH₃)₂Si(n-propylcyclopentadienyl)(tetramethylcyclopentadienyl)₂HfCl₂, (CH₃)₂Si(n-propylcyclopentadienyl)₂Hf(phenyl)₂, (C₆H₅)₂Si(n-butylcyclopentadienyl)₂HfCl₂, (CH₃)₂Si(i-butylcyclopentadienyl)₂Hf(benzyl)₂, CH₂CH₂(methylcyclopentadienyl)(i-butylcyclopentadienyl)Hf(methyl)₂, (CH₃)₂Si(s-butylcyclopentadienyl)₂Hf(benzyl)₂, (CH₃)₂Si(t-butylcyclopentadienyl)₂HfCl₂, (CH₃)₂Si(t-butylcyclopentadienyl)₂HfBr₂, (CH₃)₂Si(neopentylcyclopentadienyl)₂HfCl₂, (CH₃)₂Si(neopentylcyclopentadienyl)(dimethylcyclopentadienyl)Hf(methyl)₂, (CH₃)₂Si(cyclopentylcyclopentadienyl)₂HfCl₂, (CH₃)₂Si(cyclopentylcyclopentadienyl)₂Hfl₂, (CH₃)₂Si(n-hexylcyclopentadienyl)₂HfCl₂, (CH₃)₂Si(n-hexylcyclopentadienyl)₂Hf(phenyl)₂, (CH₃)₂Si(cyclohexylcyclopentadienyl)₂HfCl₂, (CH₃)₂Si(cyclohexylcyclopentadienyl)₂Hf(methyl)₂, (CH₃)₂Si(phenylcyclopentadienyl)₂HfCl₂, (CH₃)₂Si(dimethylcyclopentadienyl)₂HfCl₂, (CH₃)₂Si(dimethylcyclopentadienyl)₂HfBr₂, (CH₃)₂Si(dimethylcyclopentadienyl)(diethylcyclopentadienyl)₂HfI₂, (CH₃)₂Si(methylpropylcyclopentadienyl)₂Hf(methyl)₂, (CH₃)₂Si(dipropylcyclopentadienyl)₂Hf(phenyl)₂, (CH₃)₂Si(diphenylcyclopentadienyl)₂Hf(benzy)₂, CH₂CH₂CH₂(indenyl)₂HfCl₂, (CH₃)₂Si(trimethylcyclopentadienyl)₂HfCl₂, CH₂CH₂CH₂(indenylmethyl)₂HfCl₂, (CH₃)₄Si₂(cyclopentadienyl)(tetramethylcyclopentadienyl)HfCl₂, CH₂CH₂CH₂(methylcyclopentadienyl)(fluorenyl)HfCl₂, CH₂CH₂(methylcyclopentadienyl)₂TiBr₂, (CH₃)₂Si(cyclopentadienyl)(dimethylcyclopentadienyl)₂TiBr₂, (C₆H₅)C(ethylcyclopentadienyl)₂TiCl₂, CH₂CH₂CH₂(ethylcyclopentadienyl)(trimethylcyclopentadienyl)Ti(methyl)₂, CH₂CH₂(i-propylcyclopentadienyl)₂TiCl₂, (CH₃)₂Si(i-propylcyclopentadienyl)₂TiI₂, (CH₃)₂Si(n-propylcyclopentadienyl)(tetramethylcyclopentadienyl)₂TiCl₂, (CH₃)₂Si(n-propylcyclopentadienyl)₂Ti(phenyl)₂, (C₆H₅)₂Si(n-butylcyclopentadienyl)₂TiCl₂, (CH₃)₂Si(i-butylcyclopentadienyl)₂Ti(benzyl)₂, CH₂CH₂(methylcyclopentadienyl)(i-butylcyclopentadienyl)Ti(methyl)₂, (CH₃)₂Si(s-butylcyclopentadienyl)₂Ti(benzyl)₂, (CH₃)₂Si(t-butylcyclopentadienyl)₂TiCl₂, (CH₃)₂Si(t-butylcyclopentadienyl)₂TiBr₂, (CH₃)₂Si(neopentylcyclopentadienyl)₂TiCl₂, (CH₃)₂Si(neopentylcyclopentadienyl)(dimethylcyclopentadienyl)Ti(methyl)₂, (CH₃)₂Si(cyclopentylcyclopentadienyl)₂TiCl₂, (CH₃)₂Si(cyclopentylcyclopentadienyl)₂TiI₂, (CH₃)₂Si(n-hexylcyclopentadienyl)₂TiCI₂, (CH₃)₂Si(n-hexylcyclopentadienyl)₂Ti(phenyl)₂, (CH₃)₂Si(cyclohexylcyclopentadienyl)₂TiCl₂, (CH₃)₂Si(cyclohexylcyclopentadienyl)₂Ti(methyl)₂, (CH₃)₂Si(phenylcyclopentadienyl)₂TiCl₂, (CH₃)₂Si(dimethylcyclopentadienyl)₂TiCl₂, (CH₃)₂Si(dimethylcyclopentadienyl)₂TiBr₂, (CH₃)₂Si(dimethylcyclopentadienyl)(diethylcyclopentadienyl)₂TiI₂, (CH₃)₂Si(methylpropylcyclopentadienyl)₂Ti(phenyl)₂, (CH₃)₂Si(dipropylcyclopentadienyl)₂Ti(phenyl)₂, (CH₃)₂Si(diphenylcyclopentadienyl)₂Ti(benzyl)₂, CH₂CH₂CH₂(indenyl)₂TiCl₂, (CH₃)₂Si(trimethylcyclopentadienyl)₂TiCl₂, CH₂CH₂CH₂(indenylmethyl)₂TiCl₂, (CH₃)₄Si₂(cyclopentadienyl)(tetramethylcyclopentadienyl)TiCl₂ and CH₂CH₂CH₂(methylcyclopentadienyl)(fluorenyl)TiCl₂.

The metallocene compounds crosslinked at 2 sites include those represented by the general formula (10):

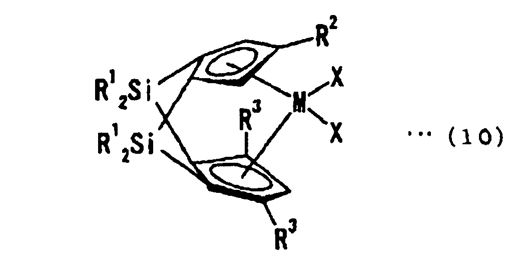

In the general formula (10), R¹ to R³ are each hydrogen atom or an aliphatic hydrocarbon group of 1 to 8 carbon atoms; X is a halogen, aliphatic hydrocarbon group of 1 to 8 carbon atoms or aromatic hydrocarbon group of 6 to 10 carbon atoms; and M is a metal of Ti, Zr or Hf, where R¹ to R³ may be the same or different.

The specific examples of the metallocene compounds crosslinked at 2 sites include those described in J. Am. Chem. Soc. Vol. 121, No.3, 565 (1999).

More specifically, they include (1,2-Me₃Si)₂(η⁵-C₅H₃)₂ZrCl₂, (1,2-Me₂Si)₂(η⁵-C₅H₃)(η⁶-C₅H₂-3-CH₃)ZrCl₂, (1,2-Me₂Si)₂(η⁵-C₅H₃)(η⁵-C₅H₃){η⁶-C₅H₂-3-(CH(CH₃)₂}ZrCl₂, (1,2-Me₂Si)₂(η⁵-C₅H₃){η⁵-C₅H-3,5-(CH(CH₃)₂}₂ZrCl₂, (1,2-Me₂Si)₂(η⁵-C₅H₂-4-CH₃){η⁵-C₅H-3,5-(CH(CH₃)₂}₂ZrCl₂, (1,2-Me₂Si)₂(η⁵-C₆H₅-4-CH(CH₃)₃){η⁵-C₅H-3,5-(CH(CH₃)₂}₂ZrCl₂, (1,2-Me₂Si)₂{η⁵-C₅H₂-4-Si(CH₃)₃}{η⁵-C₅H-3,5-(CH(CH₃)₂}₂ZrCl₂, (1,2-(C₆H₅)₂Si)₂{η⁵-C₅H₂-4-Si(CH₃)₃}{(η⁵-C₅H-3,5-(CH(CH₃)₂}₂ZrCl₂, (1,2-Me₂Si)₂(η⁵-C₅H₂-4-Si(CH₃)₃}{η⁵-C₅H-3,5-(CH(CH₃)₂}₂Zr(CH₃)₂, (1,2-Me₂Si)₂(η⁵-C₅H₃)₂HfCl₂, (1,2-Me₂Si)₂(η⁵-C₅H₃)(η⁵-C₅H₂-3-CH₃)HfCl₂, (1,2-Me₂Si)₂(η⁵-C₅H₃)₂-TiCl₂ and (1,2-Me₂Si)₂(η⁵-C₅H₃)(η⁵-C₅H₂-3-CH₃)TiCl₂.

The same aluminoxanes, boron compounds and organoaluminum compounds as used for the catalyst (i) or (ii) may be also used for the catalyst (iii).

In the catalyst, the metallocene compound is incorporated at 5.0 × 10⁻⁷ to 5.0 × 10⁻³ mols, preferably 1.0 × 10⁻⁶ to 1.0 × 10⁻⁴ mols, and organoaluminum compound at 1.0 × 10⁻⁵ to 5.0 mols, preferably 1.0 × 10⁻³ to 0.1 mols, each per mol of propylene.

The polymerization is carried out at -50 to 200°C for 0.1 to 100 hours, preferably at 0 to 150°C for 1 to 50 hours.

The diimine complexes of nickel or palladium for the catalyst (iv) composed of a diimine complex of nickel or palladium and an aluminoxane include those compounds represented by one of the general formulae (11) to (14).

The aluminoxanes include methyl aluminoxane, ethyl aluminoxane and butyl aluminoxane.

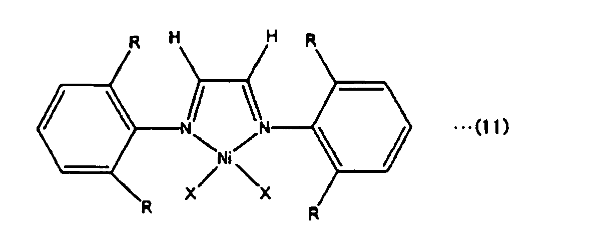

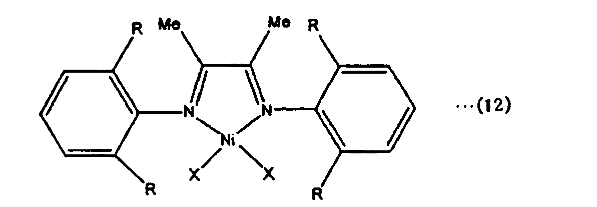

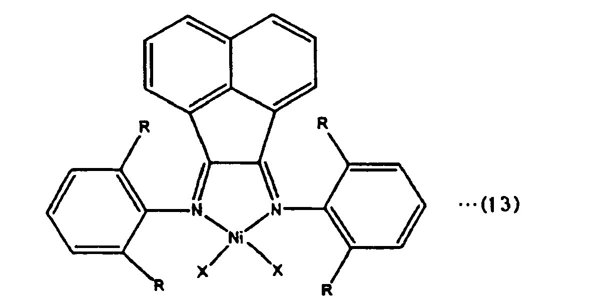

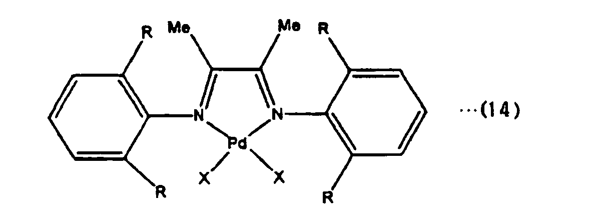

In the general formulae (11) to (14), X is Cl or methyl (Me) group or isopropyl (iPr) group, where Xs are the same or different.

In the catalyst, the diimine complex of nickel or palladium is incorporated at 1 × 10⁻⁶ to 0.1 mols, preferably 5 × 10⁻⁶ to 5 × 10⁻² mols, and aluminoxane at 1 × 10⁻⁶ to 0.1 mols, preferably 5 × 10⁻⁴ to 0.05 mols, each per mol of propylene.

The polymerization is carried out at -100 to 90°C for 0.5 to 100 hours, preferably at-50 to 50°C for 1 to 50 hours.

The compounds for the catalyst (v), which is composed of at least one complex selected from the group consisting of an alkoxy complex, alkyl amide complex and acetylacetone complex of Ti, Zr or Hf, and an aluminoxane, boron compound or organoaluminum compound include those represented by one of the general formulae (15) to (20).

M(OR)ₐX₄₋ₐ (15)

M(NR₂)ₐX₄₋ₐ (16)

M(acac)₂X₂ (17)

[OR⁴O]MX₂ (18)

[OR⁴N(R⁵)]MX₂ (19)

[N(R⁵)R⁴N(R⁵)]MX₂ (20)

In the general formulae (15) to (20), M is a metal of Ti, Zr or Hf, X is F, Cl, Br or I; R is a hydrocarbon group of 1 to 10 carbon atoms; R⁴ is a divalent aromatic, alicyclic or aliphatic hydrocarbon group, or divalent group containing an element other than C or H, e.g., oxygen, nitrogen or silicon; R⁵ is a monovalent aromatic, alicyclic or aliphatic hydrocarbon group; acac is acetylacetone, methylbutanedion, butanedion, benzoylacetone, benzoyltrifluoroacetone, dibenzoylmethane, fluoylacetone, trifluoroacetylacetone 2,4-hexanedion or trifluorodimethyl-2,4-hexanedion ligand and the same; and "a" is an integer of 2 to 4.

The examples of the hydrocarbon groups R⁴ include a divalent saturated hydrocarbon group represented by -CₙH₂ₙ-, unsaturated aliphatic hydrocarbon group represented by -CₙH₂ₙ₋₂- or -CₙH₂ₙ₋₄-, alicyclic hydrocarbon group represented by -cycloCₘH₂ₘ₋₂- and hydrocarbon group containing an aromatic ring. In these formulae, "n" is an integer of 1 to 10, preferably 2 to 5, and "m" is an integer of 5 to 15, preferably 8 to 12. The saturated hydrocarbon group may be linear or branched. The branched ones include dialkylmethylene group (R₂C=), -CH(R)CH(R)- and -CH(R)CH₂CH(R)-. R⁴ may be an oxygen- or nitrogen-containing group, e.g., -(CH₂)ₙO(CH₂)ₙ-, -(CH₂)ₙNR(CH₂)ₙ- or -C₆H₄OC₆Hc or silicon-containing group, e.g., dialkylsilylene group (R₂SiC=). Of these, a divalent saturated hydrocarbon groups represented by -CₙH₂ₙ- is more preferable.

The specific examples of the compounds represented by M(OR)ₐX₄₋ₐ, M(NR₂)ₐX₄₋ₐ or M(acac)₂X₂ of the general formula (15), (16) or (17) include Ti(OC₂H₅)₄, Ti(On-C₃H₇)₄, Ti(Oi-C₃H₇)₄, Ti(On-C₄H₉)₄, Ti(Oi-C₄H₉)₄, Ti(Os-C₄H₉)₄, Ti(Ot-C₄H₉)₄, Ti(OcycloC₅H₉)₄, Ti(OC₅H₁₁)₄, Ti(OC₆H₅)₄, Ti(OcycloC₆H₁₁)₄, Ti(OC₆H₁₃)₄, Ti(OC₂H₅)₂Cl₂, Ti(Oi-C₃H₇)₂Cl₂, Ti(On-C₃H₇)₂Br₂, Ti(On-C₄H₉)₂Cl₂, Ti(Oi-C₄H₉)₂Br₂, Ti(Os-C₄H₉)₂I₂, Ti(OC₅H₁₁)₂Cl₂, Ti(OcycloC₆H₁₁)₂F₂, Ti[N(C₂H₅)₂]₄, Ti[N(n-C₃H₇)₂]₄, Ti[N(i-C₃H₇)₂]₄, Ti[N(n-C₄H₉)₂]₄, Ti[N(i-C₄H₉)₂]₄, Ti[N(s-C₄H₉)₂]₄, Ti[N(t-C₄H₉)₂]₄, Ti[N(cycloC₅H₉)₂]₄, Ti[N(C₅H₁₁)₂]₄, Ti[N(C₆H₅)₂]₄, Ti[N(cycloC₆H₁₁)₂]₄, Ti[N(C₆H₁₃)₂]₄, Ti[N(C₂H₅)₂]₂Cl₂, Ti[N(n-C₃H₇)₂]₂Cl₂, Ti[N(i-C₃H₇)₂]₂Br₂, Ti[N(s-C₄H₉)₂]₂Cl₂, Ti[N(n-C₄H₉)₂]₂Br₂, Ti[N(t-C₄H₉)₂]₂I₂, Ti[N(C₅H₁₁)₂)₂F₂, Ti[N(C₅H₁₁)₂)₂Cl₂, Ti(acetylacetonate)₂Cl₂, Ti(methylbutanedionate)₂Cl₂, Ti(butanedionate)₂Cl₂, Ti(benzoylacetonate)₂Br₂, Ti(benzoyltrifluoroacetonate)₂F₂, Ti(dibenzoylmethanate)₂I₂, Ti(furoylacetonate)₂Br₂, Ti(trifluoroacetylacetonate)₂Br₂, Ti(2,4-hexanedionate)₂Cl₂, Zr(OC₂H₅)₄, Zr(On-C₃H₇)₄, Zr(Oi-C₃H₇)₄, Zr(On-C₄H₉)₄, Zr(Oi-C₄H₉)₄, Zr(Os-C₄H₉)₄, Zr(Ot-C₄H₉)₄, Zr(OcycloC₅H₉)₄, Zr(OC₅H₁₁)₄, Zr(OC₆H₅)₄, Zr(OcycloC₆H₁₁)₄, Zr(OC₆H₁₃)₄, Zr(OC₂H₅)₂Cl₂, Zr(Oi-C₃H₇)₂Cl₂, Zr(On-C₃H₇)₂Br₂, Zr(On-C₄H₉)₂Cl₂, Zr(Oi-C₄H₉)₂Br₂, Zr(Os-C₄H₉)₂I₂, Zr(OC₅H₁₁)₂Cl₂, Zr(OcycloC₆H₁₁)₂F₂, Zr[N(C₂H₅)₂]₄, Zr[N(n-C₃H₇)₂]₄, Zr[N(i-C₃H₇)₂]₄, Zr[N(n-C₄H₉)₂]₄,Zr[N(i-C₄H₉)₂]₄, Zr[N(s-C₄H₉)₂]₄, Zr[N(t-C₄H₉)₂]₄, Zr[N(cycloC₅H₉)₂]₄, Zr[N(C₅H₁₁)₂]₄, Zr[N(C₆H₅)₂]₄, Zr[N(cycloC₆H₁₁)₂]₄, Zr[N(C₆H₁₃)₂]₄, Zr[N(C₂H₅)₂]₂Cl₂, Zr[N(n-C₃H₇)₂]₂Cl₂, Zr[N(i-C₃H₇)₂]₂Br₂, Zr[N(s-C₄H₉)₂]₂Cl₂, Zr[N(n-C₄H₉)₂]₂Br₂, Zr[N(t-C₄H₉)₂]₂I₂, Zr[N(C₅H₁₁)₂]₂F₂, Zr[N(C₅H₁₁)₂]₂Cl₂, Zr(acetylacetonate)₂Cl₂, Zr(methylbutanedionate)₂Cl₂, Zr(butanedionate)₂Cl₂, Zr(benzoylacetonate)₂Br₂, Zr(benzoyltrifluoroacetonate)₂F₂, Zr(dibenzoylmethanate)₂I₂, Zr(furoylacetonate)₂Br₂, Zr(trifluoroacetylacetonate)₂Br₂, Zr(2,4-hexanedionate)₂Cl₂, Hf(OC₂H₅)₄, Hf(On-C₃H₇)₄, Hf(Oi-C₃H₇)₄, Hf(On-C₄H₉)₄, Hf(Oi-C₄H₉)₄, Hf(Os-C₄H₉)₄, Hf(Ot-C₄H₉)₄, Hf(OcycloC₅H₉)₄, Hf(OC₅H₁₁)₄, Hf(OC₆H₅)₄, Hf(OcycloC₆H₁₁)₄, Hf(OC₆H₁₃)₄, Hf(OC₂H₅)₂Cl₂, Hf(Oi-C₃H₇)₂Cl₂, Hf(On-C₃H₇)₂Br₂, Hf(On-C₄H₉)₂Cl₂, Hf(Oi-C₄H₉)₂Br₂, Hf(Os-C₄H₉)₂I₂, Hf(OC₅H₁₁)₂Cl₂, Hf(OcycloC₆H₁₁)₂F₂, Hf[N(C₂H₅)₂]₄, Hf[N(n-C₃H₇)₂]₄, Hf[N(i-C₃H₇)₂]₄, Hf[N(n-C₄H₉)₂]₄, Hf[N(i-C₄H₉)₂]₄, Hf[N(s-C₄H₉)₂]₄, Hf[N(t-C₄H₉)₂]₄, Hf[N(cycloC₅H₉)₂]₄, Hf[N(C₅H₁₁]₂]₄, Hf[N(C₆H₅)₂]₄, HftN[(cycloC₆Hn)₂]₄, Hf[N(C₆H₁₃)₂]₄, Hf[N(C₂H₅)₂]₂Cl₂, Hf[N(n-C₃H₇)₂]₂Cl₂, Hf[N(i-C₃H₇)₂]₂Br₂, Hf[N(s-C₄H₉)₂]₂Cl₂, Hf[N(n-C₄H₉)₂]₂Br₂, Hf[N(t-C₄H₉)₂]₂I₂, Hf[N(C₅H₁₁)₂]₂F₂, Hf[N(C₅H₁₁)₂]₂Cl₂, Hf(acetylacetonate)₂Cl₂, Hf(methylbutanedionate)₂Cl₂, Hf(butanedionate)₂Cl₂, Hf(benzoylacetonate)₂Br₂, Hf(benzoyltrifluoroacetonate)₂F₂, Hf(dibenzoylmethanate)₂I₂, Hf(furoylacetonate)₂Br₂, Hf(trifluoroacetylacetonate)₂Br₂ and Hf(2,4-hexanedionate)₂Cl₂.

The specific examples of the compounds represented by [OR⁴O]MX₂ of the general formula (18) include [OCH₂CH₂O]TiCl₂, [OCH₂CH₂CH₂O]TiCl₂, [OCH₂CH₂CH₂CH₂O]TiCl₂, [OCH₂CH₂OCH₂CH₂O]TiCl₂, [OCH₂CH₂O]Ti(CH₃)₂, [OCH₂CH₂CH₂O]Ti(CH₃)₂, [OCH₂CH₂CH₂CH₂O]Ti(CH₃)₂, [OCH₂CH₂OCH₂CH₂O]Ti(CH₃)₂, [OCH₂CH₂O]Ti(C₆H₅)₂, [OCH₂CH₂CH₂O]Ti(C₆H₅)₂, [OCH₂CH₂CH₂CH₂O]Ti(C₆H₅)₂, [OCH₂CH₂OCH₂CH₂O]Ti(C₆H₅)₂, [OCH₂CH₂O]Ti(CH₂C₆H₅)₂, [OCH₂CH₂CH₂O]Ti(CH₂C₆H₅)₂, [OCH₂CH₂CH₂CH₂O]Ti(CH₂C₆H₅)₂, [OCH₂CH₂OCH₂CH₂O]Ti(CH₂C₆H₅)₂, [OCH(C₆H₅)CH(C₆H₅)O]Ti(CH₃)₂, [OCH₂C(C₆H₅)₂CH₂O]Ti(CH₃)₂, [OCH₂CH₂O]ZrCl₂, [OCH₂CH₂CH₂O]ZrCl₂, [OCH₂CH₂CH₂CH₂O]ZrCl₂, [OCH₂CH₂OCH₂CH₂O]ZrCl₂, [OCH₂CH₂O]Zr(CH₃)₂, [OCH₂CH₂CH₂O]Zr(CH₃)₂, [OCH₂CH₂CH₂CH₂O]Zr(CH₃)₂, [OCH₂CH₂OCH₂CH₂O]Zr(CH₃)₂, [OCH₂CH₂O]Zr(C₆H₅)₂, [OCH₂CH₂CH₂O]Zr(C₆H₅)₂, [OCH₂CH₂CH₂CH₂O]Zr(C₆H₅)₂, [OCH₂CH₂OCH₂CH₂O]Zr(C₆H₅)₂, [OCH₂CH₂O]Zr(CH₂C₆H₅)₂, [OCH₂CH₂CH₂O]Zr(CH₂C₆H₅)₂, [OCH₂CH₂CH₂CH₂O]Zr(CH₂C₆H₅)₂, [OCH₂CH₂OCH₂CH₂O]Zr(CH₂C₆H₅)₂, [OCH(C₆H₅)CH(C₆H₅)O]Zr(CH₃)₂, [OCH₂C(C₆H₅)₂CH₂O]Zr(CH₃)₂, [OCH₂CH₂O]HfCl₂, [OCH₂CH₂CH₂O]HfCl₂, [OCH₂CH₂CH₂CH₂O]HfCl₂, [OCH₂CH₂OCH₂CH₂O]HfCl₂, [OCH₂CH₂O]Hf(CH₃)₂, [OCH₂CH₂CH₂O]Hf(CH₃)₂, [OCH₂CH₂CH₂CH₂O]Hf(CH₃)₂, [OCH₂CH₂OCH₂CH₂O]Hf(CH₃)₂. [OCH₂CH₂O]Hf(C₆H₅)₂, [OCH₂CH₂CH₂O]Hf(C₆H₅)₂, [OCH₂CH₂CH₂CH₂O]Hf(C₆H₅)₂, [OCH₂CH₂OCH₂CH₂O]Hf(C₆H₅)₂, [OCH₂CH₂O]Hf(CH₂C₆H₅)₂, [OCH₂CH₂CH₂O]Hf(CH₂C₆H₅)₂, [OCH₂CH₂CH₂CH₂O]Hf(CH₂C₆H₅)₂, [OCH₂CH₂OCH₂CH₂O]Hf(CH₂C₆H₅)₂, [OCH(C₆H₅)CH(C₆H₅)O]Hf(CH₃)₂ and [OCH₂C(C₆H₅)₂CH₂O]Hf(CH₃)₂.

The specific examples of the compounds represented by [OR⁴N(R⁵)]MX₂ of the general formula (19) include [OCH₂CH₂N(CH₃)]TiCl₂, [OCH₂CH₂CH₂N(C₆H₅)]TiCl₂, [OCH₂CH₂CH₂CH₂N(i-C₃H₇)₂C₆H₃)]TiCl₂, [OCH₂CH₂OCH₂CH₂N(cycloC₆H₁₁)]TlCl₂, [OCH₂CH₂N(CH₃)]Ti(CH₃)₂, [OCH₂CH₂CH₂N(C₆H₅)]Ti(CH₃)₂, [OCH₂CH₂CH₂CH₂N(i-C₃H₇)₂C₆H₃)]Ti(CH₃)₂, [OCH₂CH₂OCH₂CH₂N(cycloC₆H₁₁)]Ti(CH₃)₂, [OCH₂CH₂N(CH₃)]Ti(C₆H₅)₂, [OCH₂CH₂CH₂N(C₆H₅)]Ti(C₆H₅)₂, [OCH₂CH₂CH₂CH₂N(i-C₃H₇)₂C₆H₃)]Ti(C₆H₅)₂, [OCH₂CH₂OCH₂CH₂N(CH₃)]Ti(C₆H₅)₂, [OCH₂CH₂N(i-C₃H₇)]Ti(CH₂C₆H₅)₂, [OCH₂CH₂CH₂N(n-C₆H₁₃)]Ti(CH₂C₆H₅)₂, [OCH₂CH₂CH₂CH₂N(C₆H₅)]Ti(CH₂C₆H₅)₂, [OCH₂CH₂OCH₂CH₂N(i-C₃H₇)₂C₆H₃)]Ti(CH₂C₆H₅)₂, [OCH(C₆H₅)CH(C₆H₅)N(i-C₃H₇)]Ti(CH₃)₂, [OCH₂C(C₆H₅)₂CH₂N(C₆H₅)]Ti(CH₃)₂, [OCH₂CH₂N(CH₃)]ZrCl₂, [OCH₂CH₂CH₂N(C₆H₅)]ZrCl₂, [OCH₂CH₂CH₂CH₂N((i-C₃H₇)₂C₆H₃)]ZrCl₂, [OCH₂CH₂OCH₂CH₂N(cycloC₆H₁₁)]ZrCl₂, [OCH₂CH₂N(CH₃)]Zr(CH₃)₂, [OCH₂CH₂CH₂N(C₆H₅)]Zr(CH₃)₂, [OCH₂CH₂CH₂CH₂N((i-C₃H₇)₂C₆H₃)]Zr(CH₃)₂, [OCH₂CH₂OCH₂CH₂N(cycloC₆H₁₁)]Zr(CH₃)₂, [OCH₂CH₂N(CH₃)]Zr(C₆H₅)₂, [OCH₂CH₂CH₂N(C₆H₅)]Zr(C₆H₅)₂, [OCH₂CH₂CH₂CH₂N((i-C₃H₇)₂C₆H₃)]Zr(C₆H₅)₂, [OCH₂CH₂OCH₂CH₂N(CH₃)]Zr(C₆H₅)₂, [OCH₂CH₂N(1-C₃H₇)]Zr(CH₂C₆H₅)₂, [OCH₂CH₂CH₂N(n-C₆H₁₃)]Zr(CH₂C₆H₅)₂, [OCH₂CH₂CH₂CH₂N(C₆H₅)]Zr(CH₂C₆H₅)₂, [OCH₂CH₂OCH₂CH₂(N(i-C₃H₇)₂C₆H₃)]Zr(CH₂C₆H₅)₂, [OCH(C₆H₅)CH(C₆H₅)N(i-C₃H₇)]Zr(CH₃)₂, [OCH₂C(C₆H₅)₂CH₂N(C₆H₅)]Zr(CH₃)₂, [OCH₂CH₂N(CH₃)]HfCl₂, [OCH₂CH₂CH₂N(C₆H₅)]HfCl₂, [OCH₂CH₂CH₂CH₂N(i-C₃H₇)₂C₆H₃)]HfCl₂, [OCH₂CH₂OCH₂CH₂N(cycloC₆H₁₁)]HfCl₂, [OCH₂CH₂N(CH₃)]Hf(CH₃)₂, [OCH₂CH₂CH₂N(C₆H₅)]Hf(CH₃)₂, [OCH₂CH₂CH₂CH₂N((i-C₃H₇)₂C₆H₃)]Hf(CH₃)₂, [OCH₂CH₂OCH₂CH₂N(cycloC₆H₁₁)]Hf(CH₃)₂, [OCH₂CH₂N(CH₃)]Hf(C₆H₅)₂, [OCH₂CH₂CH₂N(C₆H₅)]Hf(C₆H₅)₂, [OCH₂CH₂CH₂CH₂N((i-C₃H₇)₂C₆H₃)]Hf(C₆H₅)₂, [OCH₂CH₂OCH₂CH₂N(CH₃)]Hf(C₆H₅)₂, [OCH₂CH₂N(i-C₃H₇)]Hf(CH₂C₆H₅)₂, [OCH₂CH₂CH₂N(n-C₆H₁₃)]Hf(CH₂C₆H₅)₂, [OCH₂CH₂CH₂CH₂N(C₆H₅)]Hf(CH₂C₆H₅)₂, [OCH₂CH₂OCH₂CH₂N((i-C₃H₇)₂C₆H₃)]Hf(CH₂C₆H₅)₂, [OCH(C₆H₅)CH(C₆H₅)N(i-C₃H₇)]Hf(CH₃)₂ and [OCH₂C(C₆H₅)₂CH₂N(C₆H₅)]Hf(CH₃)₂.

The specific examples of the compounds represented by [N(R⁵)R⁴N(R⁵)]MX₂ of the general formula (20) include [N(CH₃)CH₂CH₂N(CH₃)]TiCl₂, [N((i-C₃H₇)₂C₆H₃)CH₂CH₂CH₂N((i-C₃H₇)₂C₆H₃)]TiCl₂, [N(C₆H₅)CH₂CH₂CH₂CH₂N(C₆H₅)]TiCl₂, [N(cycloC₆H₁₁)CH₂CH₂OCH₂CH₂N(cycloC₆H₁₁)]TiCl₂, [N(CH₃)CH₂CH₂N(CH₃)]Ti(CH₃)₂, [N(C₆H₅)CH₂CH₂CH₂N(C₆H₅)]Ti(CH₃)₂, [N((i-C₃H₇)₂C₆H₃)CH₂CH₂CH₂CH₂N((i-C₃H₇)₂C₆H₃)]Ti(CH₃)₂, [N(cycloC₆H₁₁)CH₂CH₂OCH₂CH₂N(cycloC₆H₁₁)]Ti(CH₃)₂, [N(CH₃)CH₂CH₂N(CH₃)]Ti(C₆H₅)₂, [N(C₆H₅)CH₂CH₂CH₂N(C₆H₅)]Ti(C₆H₅)₂, [N((i-C₃H₇)₂C₆H₃)CH₂CH₂CH₂N((i-C₃H₇)₂C₆H₃)]Ti(C₆H₅)₂, [N(CH₃)CH₂CH₂OCH₂CH₂N(CH₃)]Ti(C₆H₅)₂, [N(i-C₃H₇)CH₂CH₂N(i-C₃H₇)]Ti(CH₂C₆H₅)₂, [N(n-C₆H₁₃)CH₂CH₂CH₂N(n-C₆H₁₃)]Ti(CH₂C₆H₅)₂, [N(C₆H₅)CH₂CH₂CH₂CH₂N(C₆H₅)]Ti(CH₂C₆H₅)₂, [N((i-C₃H₇)₂C₆H₃)CH₂CH₂OCH₂CH₂N((i-C₃H₇)₂C₆H₃)]Ti(CH₂C₆H₅)₂, [N(i-C₃H₇)CH(C₆H₅)CH(C₆H₅)N(i-C₃H₇)]Ti(CH₃)₂, [N(C₆H₅)CH₂C(C₆H₅)₂CH₂N(C₆H₅)]Ti(CH₃)₂, [N(CH₃)CH₂CH₂N(CH₃)]ZrCl₂, [N((i-C₃H₇)₂C₆H₃)CH₂CH₂CH₂N((i-C₃H₇)₂C₆H₃)]ZrCl₂, [N(C₆H₅)CH₂CH₂CH₂CH₂N(C₆H₅)]ZrCl₂, [N(cycloC₆H₁₁)CH₂CH₂OCH₂CH₂N(cycloC₆H₁₁)]ZrCl₂, [N(CH₃)CH₂CH₂N(CH₃)]Zr(CH₃)₂, [N(C₆H₅)CH₂CH₂CH₂N(C₆H₅)]Zr(CH₃)2, [N((i-C₃H₇)₂C₆H₃)CH₂CH₂CH₂CH₂N((i-C₃H₇)₂C₆H₃)]Zr(CH₃)₂, [N(cycloC₆H₁₁)CH₂CH₂OCH₂CH₂N(cycloC₆H₁₁)]Zr(CH₃)₂, [N(CH₃)CH₂CH₂N(CH₃)]Zr(C₆H₅)₂, [N(C₆H₅)CH₂CH₂CH₂N(C₆H₅)]Zr(C₆H₅)₂, [N((i-C₃H₇)₂C₆H₃)CH₂CH₂CH₂N((i-C₃H₇)₂C₆H₃)]Zr(C₆H₅)₂, [N(CH₃)CH₂CH₂OCH₂CH₂N(CH₃)]Zr(C₆H₅)₂, [N(i-C₃H₇)CH₂CH₂N(i-C₃H₇)]Zr(CH₂C₆H₅)₂, [N(n-C₆H₁₃)CH₂CH₂CH₂N(n-C₆H₁₃)]Zr(CH₂C₆H₅)₂, [N(C₆H₅)CH₂CH₂CH₂CH₂N(C₆H₅)]Zr(CH₂C₆H₅)₂, [N((i-C₃H₇)₂C₆H₃)CH₂CH₂OCH₂CH₂N((i-C₃H₇)₂C₆H₃)]Zr(CH₂C₆H₅)₂, [N(i-C₃H₇)CH(C₆H₅)CH(C₆H₅)N(i-C₃H₇)]Zr(CH₃)₂, [N(C₆H₅)CH₂C(C₆H₅)₂CH₂N(C₆H₅)]Zr(CH₃)₂, [N(CH₃)CH₂CH₂N(CH₃)]HfCl₂, [N((i-C₃H₇)₂C₆H₃)CH₂CH₂CH₂N((i-C₃H₇)₂C₆H₃)]HfCl₂, [N(C₆H₅)CH₂CH₂CH₂CH₂N(C₆H₅)]HfCl₂, [N(cycloC₆H₁₁)CH₂CH₂OCH₂CH₂N(cycloC₆H₁₁)]HfCl₂, [N(CH₃)CH₂CH₂N(CH₃)]Hf(CH₃)₂, [N(C₆H₅)CH₂CH₂CH₂N(C₆H₅)]Hf(CH₃)₂, [N((i-C₃H₇)₂C₆H₃)CH₂CH₂CH₂CH₂N((i-C₃H₇)₂C₆H₃)]Hf(CH₃)₂, [N(cycloC₆H₁₁)CH₂CH₂OCH₂CH₂N(cycloC₆H₁₁)]Hf(CH₃)₂, [N(CH₃)CH₂CH₂N(CH₃)]Hf(C₆H₅)₂, [N(C₆H₅)CH₂CH₂CH₂N(C₆H₅)]Hf(C₆H₅)₂, [N((i-C₃H₇)₂C₆H3)CH₂CH₂CH2N((i-C₃H₇)₂C₆H₃)]Hf(C₆H₅)2, [N(CH₃)CH₂CH₂OCH₂CH₂N(CH₃)]Hf(C₆H₅)₂, [N(i-C₃H₇)CH₂CH₂N(i-C₃H₇)]Hf(CH₂C₆H₅)₂, [N(n-C₆H₁₃)CH₂CH₂CH₂N(n-C₆H₁₃)]Hf(CH₂C₆H₅)₂, [N(C₆H₅)GH₂CH₂CH₂CH₂N(C₆H₅)]Hf(CH₂C₆H₅)₂, [N((i-C₃H₇)₂C₆H₃)CH₂CH₂OCH₂CH₂N((i-C₃H₇)₂C₆H₃)]Hf(CH₂C₆H₅)₂, [N(i-C₃H₇)CH(C₆H₅)CH(C₆H₅)N(i-C₃H₇)]Hf(CH₃)₂ and [N(C₆H₅)CH₂C(C₆H₅)₂CH₂N(C₆H₅)]Hf(CH₃)₂.

The same aluminoxanes, boron compounds and organoaluminum compounds as used for the catalyst (i) or (ii) may be also used for the catalyst (v).

In the catalyst, the metal complex is incorporated at 1 × 10⁻⁵ to 0.5 mols, preferably 1 × 10⁻⁴ to 0.1 mols, and aluminoxane, boron compound or organoaluminum compound at 1 × 10⁻⁶ to 0.5 mols, preferably 1 × 10⁻⁵ to 0.1 mols, each per mol of propylene.

The polymerization is carried out at -100 to 100°C for 0.5 to 50 hours, preferably at -80 to 80°C for 1 to 30 hours.

In the emulsion composition of the present invention, polypropylene as the base for the modified polypropylene can be produced in the presence of one of the above-described catalysts, preferably in the presence of one of the catalysts (i) to (iii), more preferably the catalyst (i). When one of the catalysts (i) to (v) is used, hydrogen, diethyl zinc or a compound containing the Si-H bond can be incorporated as a molecular-weight adjustor.

These catalysts may be supported by a carrier, e.g., silica, alumina, zirconia or titania.

Polypropylene having a racemic diad fraction [r] varying in a range from 0.12 to 0.88, depending on the catalyst and reaction conditions, can be produced.

Its racemic diad fraction [r] is preferably in a range from 0.51 to 0.88, particularly preferably 0.55 to 0.84. Polypropylene may not have high thermal stability when its racemic diad fraction [r] is below 0.12, and may not be sufficiently soluble in an organic solvent when it is above 0.88. Polypropylene having a racemic diad fraction [r] in a range from 0.12 to 0.88 will exhibit high thermal stability, i.e., high heat resistance, and be highly soluble in a polar solvent.

Racemic diad fraction [r], defined for present invention, is measured by a method known to persons skilled in the art, i.e., from intensity of the peak due to a stereoregular structure, determined by ¹³C-NMR.

The polypropylene for the present invention may be a copolymer with ethylene, an α-olefin or diolefin present at below 10% by mol, so long as it has a racemic diad fraction [r] determined by ¹³C-NMR in a range from 0.12 to 0.88.

It is preferable that the α-olefin has 4 to 8 carbon atoms, and diolefin has 4 to 14 carbon atoms. More specifically, the α-olefins include 1-butene, 1-hexene and 4-methyl-1-pentene, and diolefins include butadiene, 1,5-hexadiene, 1,7-octadiene and 1,9-decadiene. Of these, a homopolymer of polypropylene is more preferable.

The polypropylene for the present invention preferably has a weight-average molecular weight (Mw) of 2,000 to 400,000, particularly preferably 5,000 to 250,000, and a molecular weight distribution (Mw/Mn) of 1.01 to 3.00, particularly preferably 1.1 to 2.5.

The polypropylene for the present invention is soluble in saturated aliphatic hydrocarbons, e.g., pentane, hexane and heptane, saturated alicyclic hydrocarbons, e.g., cyclohexane and cyclopentane, and aromatic hydrocarbons, e.g., benzene, toluene and xylene. It preferably has a solubility of 5 g or more in toluene at normal temperature, more preferably 10 to 100 g, particularly preferably 15 to 50 g.

Solubility of polypropylene in toluene at normal temperature is defined as grams of polypropylene as a solute in 100 g of toluene as a solvent. In the method normally adopted to determine the solubility, the solute is put in the solvent at normal temperature (25°C) to an excessive extent until the solvent is completely saturated with the solute, then a certain quantity of the accurately weighed solution is treated to completely remove the solvent, and the solute is weighed to determine its mass (grams) per 100 g of the solvent (toluene).

### 2. Production of modified polypropylene

The method for producing modified polypropylene is not limited, so long as it modifies polypropylene as the base polymer to have 0.5 or more hydrophilic functional groups on the average per one molecular chain of the polypropylene. The polypropylene as the base may be modified in a solution or dried state.

The representative methods for producing modified polypropylene include (1) living polymerization to introduce a hydrophilic functional group at the polymer chain end, (2) radical modification to introduce a hydrophilic functional group in the polypropylene, and (3) copolymerization of polypropylene with a modifier monomer protected by a protective group. These methods may be adopted either individually or in combination. When a modifier in itself has no function of introducing a hydrophilic functional group into polypropylene, it may be a hydrophilic functional group when saponified or sulfonated after the reaction is completed.

### (1) Method for introducing a hydrophilic functional group at the polymer chain end by living polymerization of propylene

This method introduces a hydrophilic functional group at the polymer chain end by living polymerization of propylene carried out in the presence of the homogeneous metal complex catalyst (i), and subsequently reacts a modifier having a hydrophilic functional group with the resulting polymer.

The modifier is a compound having a hydrophilic functional group, for which at least one compound is selected from the group consisting of a (meth)acrylic acid, derivative thereof, nitrile-based compound and styrene derivative.

(Meth)acrylic acids and derivatives thereof include:
alkali metal salts of (meth)acrylic acids, e.g., salts of sodium acrylate, potassium acrylate, lithium acrylate, sodium methacrylate, potassium methacrylate and lithium methacrylate; halides of (meth)acrylic acids, e.g., acrylic acid chloride, acrylic acid bromide, α-chloro-methyl acrylate, methacrylic acid chloride, methacrylic acid bromide, α-chloro-methyl methacrylate; amino-containing (meth)acrylic acid derivatives, e.g., acrylamide, N-methyl acrylamide, N-isopropyl acrylamide, N,N-dimethyl acrylamide, N,N-diisopropyl acrylamide, methacrylamide, N,N-dimethyl methacrylamide, N,N-diisopropyl methacrylamide, N,N-dimethylaminoethyl acrylate, N,N-dimethylaminoethyl methacrylate, acrylic acid-2-aminoethyl, methacrylic acid-2-aminoethyl, N-methyl methacrylamide, 2-(2-(2-(2-acryloyloxyethoxy)ethoxy)ethoxy)ethyl-1-amine and 3-(2-(2-(2-(4-vinylphenyl)ethoxy)ethoxy)ethoxy)propane-1-amine; di(meth)acrylates, e.g., ethylene glycol diacrylate, diethylene glycol diacrylate, dipropylene glycol diacrylate, 1,4-butanediol diacrylate, 1,6-hexanediol diacrylate, ethylene glycol dimethacrylate, dipropylene glycol dimethacrylate, 1,4-butanediol dimethacrylate and 1,6-hexanediol dimethacrylate; OH- or alkoxy-containing (meth)acrylic acid derivatives, e.g., 2-hydroxyethyl acrylate, 3-hydroxypropyl acrylate, 4-hydroxybutyl acrylate, trimethoxysilylpropyl acrylate, 2-methoxyethyl acrylate, 2-hydroxyethyl methacrylate, 3-hydroxypropyl methacrylate, 4-hydroxybutyl methacrylate, 2-methoxyethyl methacrylate and trimethoxysilylpropyl methacrylate; isocyanate-containing (meth)acrylic acid derivatives, e.g., 2-isocyanateethyl methacrylate and 2-isocyanateethyl acrylate; and P-containing (meth)acrylic acid derivatives, e.g., ethylene glycol methacrylate phosphate and 2-methacryloyloxyethyl phosphorylcholine. Other P-containing (meth)acrylic acid derivatives include CH₂=C(CH₃)CO-O-CH₂-CH₂(CH₂Cl)-O-PO(OH)₂ and CH₂=C(CH₃)CO-O-CH₂-CH₂-O-PO(OH)-O-NH₃(CH₂CH₂OH).

Of these compounds, acrylic acid, methacrylic acid and OH- or alkoxy-containing derivatives of these acids are more preferable.

### Nitrile-based compounds and styrene derivatives include:

nitrile compounds, e.g., acrylonitrile and methacrylonitrile; vinyl compounds, e.g., salts of sodium vinylsulfonate, potassium vinylsulfonate and lithium vinylsulfonate, vinyl pyridine, N-vinyl pyridine, vinyl pyrrolidone, acrolein, vinyl acetate (saponified), vinyl propionate (saponified), vinyl butyrate (saponified), vinyl trimethylsilane, vinyl ethoxysilane, vinyl acetoamide, N-vinyl acetoamide and allyl chloride; and styrene derivatives, e.g., hydroxystyrene, aminostyrene, vinyl benzoate, cyanostyrene, nitrostyrene and acetoxystyrene, of these styrene derivatives are particularly preferable.

The other modifiers having a hydrophilic functional group include compounds based on sulfonic acid, phosphoric acid and thiol.

The compounds based on sulfonic acid include 3-acryloyloxypropane sulfonic acid, 2-(2-(2-acryloyloxyethoxy)ethoxy)propane-1-sulfonic acid, 3-(2-(2-(4-vinylphenyl)ethoxy)ethoxy)propane-1-sulfonic acid and p-styrene sulfonic acid.

The compounds based on phosphoric acid include 4-(2-(2-(2-acryloyloxyethoxy)ethoxy)ethoxybutane-1-phosphoric acid ester.

The thiol-based compounds include alkenyl thiols, e.g., 2-(2-(2-acryloyloxyethoxy)ethoxy)pr opane-1-thiol, 4-(2-(2-(4-isopropenylphenyl)ethoxy)ethoxy)butane-1-thiol, 3-(2-(2-(4-vinylphenyl)ethoxy)ethoxy)propane-1-thiol and 3-(2-(2-(4-isopropenylphenyl)ethoxy)ethoxy)propane-1-thiol.

A modifier containing active hydrogen is preferably complexed in the presence of a complexing agent, e.g., an organoaluminum compound.

More specifically, the organoaluminum compounds include trimethyl aluminum, triethyl aluminum, tripropyl aluminum, triisopropyl aluminum, tributyl aluminum, triisobutyl aluminum, dimethyl aluminum chloride, diethyl aluminum chloride, diisobutyl aluminum chloride and bis(2,6-di-tBu-phenoxy)methyl aluminum.

The molar ratio of the complexing agent to modifier having active hydrogen is set according to number of hydrogen atoms in the modifier. Number of active hydrogen in the modifier is one when the substituent is OH, COOH or NH(CH₃), and 2 when it is NH₂ or PO₃H₂. The molar ratio is 0.3 times of the active hydrogen number or more, preferably 1.01 to 10 times, more preferably 1.1 to 3 times.

The complexing reaction is preferably carried out in the presence of an inactive, liquid solvent as a reaction solvent, such as saturated aliphatic hydrocarbon, e.g., propane, butane, pentane, hexane or heptane; saturated alicyclic hydrocarbon, e.g., cyclopropane or cyclohexane; or aromatic hydrocarbon, e.g., benzene, toluene or xylene.

The complexing reaction is carried out at -100 to 100°C for 1 minute to 10 hours, preferably at -90 to 50°C for 2 minutes to 5 hours, more preferably at -80 to 30°C for 5 minutes to 3 hours.

The modifier may be incorporated at a time or in installments. Normally, one modifier species is used. However, 2 or more species may be used. When 2 or more species are used, they may be mixed with each other before being reacted with polypropylene, or may be individually incorporated in 2 or more stages.

The modification reaction is carried out at -100 to 100°C for 0.5 to 50 hours, preferably at -90 to 50°C for 1 to 30 hours, more preferably at -80 to 30°C for 1 to 15 hours.

The modified polypropylene has a structure with 0.5 or more modifier compounds, preferably 1 or more compounds, at the main chain ends of the polypropylene.

### (2) Method for introducing a hydrophilic functional group by radical modification of polymerized propylene

This method introduces a hydrophilic functional group by reacting the polypropylene as the base polymer with a modifier in the presence of a radical reaction initiator.

The radical modification of polypropylene with a modifier may be carried out after dissolving the polypropylene in an adequate solvent or in a kneader. Order of incorporating the modifier and radical reaction initiator is not limited.

The modifiers used for the method (1) may be also used for the method (2). The other useful modifiers include ethylene dicarboxylic acids (e.g., maleic and fumaric acids), propylene dicarboxylic acids (e.g., itaconic acid (CH₂=C(COOH)-CH₂-COOH), citraconic acid, mesaconic acid (CH₃-C(COOH)=CHCOOH) and glutaconic acid (CH₂(COOH)-CH₂=CHCOOH)), butene dicarboxylic acids (e.g., vinyl maleic acid), pentene dicarboxylic acids (e.g., allylsuccinic acid (CH₂=CH-CH₂-CH(COOH)-CH₂COOH)), hexene dicarboxylic acids, heptene dicarboxylic acids, octene dicarboxylic acids, nonene dicarboxylic acids, decene dicarboxylic acids, butanediene dicarboxylic acids (e.g., propanediene dicarboxylic acid and vinyl fumaric acid), pentadiene dicarboxylic acids, hexadiene dicarboxylic acids (e.g., butenylmaleic acid) and derivatives thereof, heptadiene dicarboxylic acids, octadiene dicarboxylic acids, nonadiene dicarboxylic acids, decadiene dicarboxylic acids, cyclohexene dicarboxylic acids (e.g., tetrahydrophthalic acid, tetrahydroisophthalic acid and tetrahydroterephthalic acid), cyclopentene dicarboxylic acids, cycloheptene dicarboxylic acids, cyclooctene dicarboxylic acids, cyclononene dicarboxylic acids, cyclodecene dicarboxylic acids, cyclohexadiene dicarboxylic acids (dihydrophthalic acid, dihydroisophthalic acid and dihydroterephthalic acid), cyclopentadiene dicarboxylic acids, cyclooctadiene dicarboxylic acids, cyclononadiene dicarboxylic acids, cyclodecadiene dicarboxylic acids, and salts of these compounds.

Common radical reaction initiators include azo-based compounds and organic peroxides. Any initiator commonly used for radical polymerization may be used for the present invention.

Examples of the radical reaction initiators include azo-based compounds, e.g., azobisisobutylonitrile; ketone peroxides, e.g., 1,1-bis-tertiary-butylperoxy-3,3,5-trimethylcyclohexane; dialkylperoxides, e.g., dicumyl peroxide; hydroperoxides, e.g., 2,5-dimethylhexane-2,5-dihydroperoxide; dialkylperoxides, e.g., benzoyl peroxoide, peroxy esters, e.g., 2,5-dimethyl-2,5-dibenzoylperoxyhexane and 2,5-dimethyl-2,5-di-t-butylperoxyhexane; diphenylbutanes, e.g., 2,3-dimethyl-2,3-diphenylbutane; and t-butylperoxy-2-ethylhexanoate.

The radical reaction initiator is incorporated at 0.05 to 50% by mass based on polypropylene, preferably 0.1 to 30% by mass, more preferably 1 to 10% by mass.

The modification reaction is carried out at -50 to 200°C, preferably -30 to 180°C. The reaction temperature outside of the above range is not desirable; the reaction proceeds slowly at below -50°C, whereas the polypropylene molecular chains are cut excessively at above 200°C. The reaction is carried out particularly preferably at 0 to 150°C in the presence of a hydrocarbon solvent. Temperature may be kept constant or varied during the modification reaction.

Reaction time is 1 minute or more, preferably 5 minutes to 10 hours, particularly preferably 10 minutes to 5 hours. Increasing reaction time increases quantity of the modifier introduced.

The modifier may be incorporated at a time or in installments. Normally, one modifier species is used. However, 2 or more species may be used. When 2 or more species are used, they may be mixed with each other before being reacted with polypropylene, or may be individually incorporated in 2 or more stages.

### (3) Method for copolymerization of propylene with a modifier protected by a protective group

The modifiers for this method include those compounds based on carboxylic acid, sulfonic acid, thiol and phosphoric acid for the method (1), described earlier, and alcohol-based compounds described below. This method introduces a functional group by copolymerizing propylene with the hydrophilic functional group in these compounds, after it is protected in the same manner as in the method (1).

The alcohol-based compounds include OH-containing compounds, 2-(2-acryloyloxyethoxy)ethanol, 2-hydroxyethyl acrylate, 3-hydroxypropyl acrylate, 4-hydroxybutyl acrylate, 2-hydroxyethyl methacrylate, 3-hydroxypropyl methacrylate, 3-(2-(4-vinylphenyl)ethoxy)propanol, 4-hydroxystyrene and 4-isopropeneyl(phenol). Unsaturated alcohols, e.g., alkenyl alcohols and alkadienyl alcohols, are also useful.

More specifically, alkenyl alcohols include 3-butene-1-ol; pentenols, e.g., 3-butene-1-ol, 4-pentene-1-ol and 4-pentene-2-ol; hexenols, e.g., 5-hexene-1-ol, 5-hexene-2-ol and 5-hexene-3-ol; heptenols, e.g., 6-heptene-1-ol, 6-heptene-2-ol, 6-heptene-3-ol, 1-heptene-4-ol, 4-methyl-6-heptene-1-ol and 5-methyl-6-heptene-1-ol; octenols, e.g., 7-octene-1-ol, 7-octene-2-ol, 7-octene-3-ol, 7-octene-4-ol and 5-butyl-7-octene-1-ol; and nonenols, decenols, undecenols, dodecenols and tetradecenols. Of these, hexenols, heptenols, octenols, nonenols, decenols, undecenols and dodecenols are more preferable, and octenols and dodecenols are particularly preferable.

Alkadienyl alcohols include 1,4-pentadiene-3-ol; hexadienols, e.g., 2,5-hexadiene-1-ol and 1,5-hexadiene-3-ol; heptadienols, e.g., 2,6-heptadiene-1-ol, 3,6-heptadiene-1-ol, 1,6-heptadiene-3-ol, 3,6-heptadiene-2-ol, 4-methyl-1,6-heptadiene-3-ol and 5-ethyl-1,6-heptadiene-3-ol; octadienols, e.g., 2,7-octadiene-1-ol, 3,7-octadiene-1-ol, 3,7-octadiene-2-ol, 4,7-octadiene-1-ol, 4,7-octadiene-2-ol, 1,7-octadiene-3-ol and 5-butyl-2,7-octadiene-1-ol; and nonadienols, decadienols, undecadienols and dodecadienols. Of these, hexadienols, heptadienols, octadienols, nonadienols and decadienols are more preferable, and octadienols are particularly preferable.

These methods can produce the modified polypropylene having 0.5 or more hydrophilic functional groups on the average, more preferably 1 or more hydrophilic functional groups on the average. The modifier may be partly substituted by a compound having no hydrophilic functional group, within limits not harmful to the object of the present invention. In this case, 2 or more species of the modifiers may be used. They may be mixed with each other before being reacted with polypropylene, or may be individually incorporated in 2 or more stages.

The as-modified polypropylene may be used as a starting material for the emulsion composition directly or after being treated to remove the unreacted modifier or a by-product modifier derivative (modifier oligomer or polymer).

The modified polypropylene shows no IR absorption spectrum peak at 770, 842, 870, 998 or 1022 cm⁻¹ at room temperature, by which is meant that it has no crystal segment, because these peaks are characteristically derived from the crystal segment of polypropylene.

Moreover, it shows an absorption peak at 973 cm⁻¹ due to the amorphous segment of isotactic polypropylene, or peaks at 962 and 977 cm⁻¹ due to the amorphous segment of syndiotactic polypropylene.

These IR absorption peaks may shift to some extent depending on analysis conditions and analyzers. The present invention is intended to produce an emulsion composition using a specific, soluble polypropylene free of crystalline polypropylene sparingly soluble in an organic solvent.

The modified polypropylene for the present invention has the polypropylene segment of improved hydrophilicity, and is highly soluble in a polar solvent to allow the solution of high concentration to be emulsified and facilitate removal of the solvent by distillation from the emulsification effluent. Moreover, the resulting emulsion composition is highly stable.

### 3. Production of emulsion composition

The emulsion composition of excellent characteristics can be efficiently produced by emulsifying the modified polypropylene in water and replacing the organic solvent by water.

For production of the emulsion composition of the present invention, the modified polypropylene is used in the form of solution of adequate concentration. The concentration is preferably as high as possible, to facilitate removal of the solvent by distillation from the emulsification effluent. It is preferably 15 to 50% by mass, although varying depending on molecular weight of the modified polypropylene, more preferably 15 to 40% by mass, particularly preferably 20 to 35% by mass. The liquid starting material is hereinafter referred to as the modified polypropylene solution.

One of the methods for dispersing and emulsifying the modified polypropylene in water slowly puts a solution of the modified polypropylene in water being stirred by a homogenizer. The solution and water may be simultaneously stirred. The homogenizer may be selected from a kneader operating at elevated temperature and pressure, homomixer or colloid mill. The stirring may be carried out at room temperature. However, increasing temperature to 100 to 200°C, preferably 130 to 170°C, can accelerate the emulsification.

Quantity of water for dispersing and emulsifying the modified polypropylene is 5 to 30 times by mass of the modified polypropylene, preferably 10 to 25 times, more preferably 10 to 20 times, although varying depending on type and purpose of the modified polypropylene, or concentration of the modified polypropylene solution. The emulsion of given concentration for specific purposes can be produced by removing the solvent (including water) by distillation from the emulsification effluent.

The modified polypropylene solution may be incorporated with a neutralizer. The neutralizers include basic compounds, acidic compounds, e.g., hydrochloric acid, sulfuric acid and nitric acid, and metallic soap.

The basic compounds include sodium hydroxide, potassium hydroxide, ammonia, ammonium hydroxide, methylamine, ethylamine, propylamine, ethanolamine, propanolamine, diethanolamine, diethylamine, N,N-dimethylethanolamine, 2-dimethylamino-2-methyl-1-propanol, 2-amino-2-methyl-1-propanol, ethylenediamine, piperidine, pyrrolidine, pyrroles, polyethyleneimine and morpholine, of which sodium hydroxide, potassium hydroxide, ammonia and ammonium hydroxide are more preferable.

Metallic soaps include calcium stearate, calcium laurate, calcium ricinoleate, barium stearate, barium laurate, barium ricinoleate, barium naphthenate, zinc stearate, zinc laurate, zinc ricinoleate, tin stearate and magnesium stearate. Of these, calcium laurate is preferable.

Content of the neutralizer is not limited. However, it is preferable to incorporate it to neutralize the hydrophilic group in the modified polypropylene to 10% or more of the totaled acidic and/or basic group(s), preferably 20% or more, still more preferably 30% or more.

The modified polypropylene solution may be incorporated with a surfactant, which may be selected from the representative nonionic, anionic and cationic surfactants.

Nonionic surfactants include polyoxyethylenealkylphenyl ethers, e.g., polyoxyethylenenonylphenyl ether; polyoxyethylenealkyl ethers, e.g., polyoxyethylenelauryl ether; polyoxyethylenealkylaryl ethers; polyethylenealkyl esters; sorbitanalkyl esters, e.g., sorbitan monostearate; polyoxyethylenesorbitanalkyl esters, e.g., polyoxyethylenesorbitan monooleate; and poly(oxyethylene/oxypropylene) block copolymer.

Other nonionic surfactants include polyethylene glycol, polypropylene glycol, polyacrylate, polymethacrylate, polyaniline, polypyrrole, polyacetylene, polyacrylonitrile, polyglyceride and fatty acid ester glyceride.

Anionic surfactants include sulfuric acid esters of higher fatty acids, fatty acid salts, alkyls or alcohols (ethers), higher alkyl disulfonates, sulfonated higher fatty acid salts, alkyl aryl polyoxyethylene sulfuric acid ester salts, higher fatty acid sulfuric acid esters, sulfonates of higher fatty acid esters or alcohol ethers, alkyl aryl sulfonates (e.g., alkylbenzene sulfonate), sulfuric acid ester salts of higher fatty acid amides (treated into alkylols), and alkyl phosphoric acid esters.

Cationic surfactants include amine salt and tertiary ammonium salt types. Ampholytic surfactants include alkyl betain and alkyl imidazoline.

A surfactant is normally used after being dissolved in a solvent. The solvents include water, alcohols of 1 to 10 carbon atoms and methylene chloride, of which methyl alcohol, ethyl alcohol, propyl alcohol, and water/methyl alcohol and water/ethyl alcohol solvents.

Content of the surfactant is not limited. However, it is preferably 20% by mass or less based on the modified polypropylene solution, preferably 15% by mass or less, still more preferably 10% by mass or less. The modified polypropylene for the present invention, which has very excellent emulsification characteristics, needs a smaller quantity of surfactant than the conventional one. It may be incorporated with a surfactant at low 0.001 to 5% by mass. It needs no surfactant depending on circumstances. Therefore, the modified polypropylene as the major component of the emulsion composition of the present invention can fully exhibit its polymer characteristics.

### 4. Emulsion composition of modified polypropylene

The modified polypropylene for the emulsion composition of the present invention comprises a polypropylene having a racemic diad fraction [r] in a specific range as the base polymer which is modified with a modifier by the procedure described above to have a high solubility in an organic solvent. It is dispersed in water and emulsified, in the presence of a neutralizer and/or surfactant, to produce the emulsion composition.

The emulsion composition of the present invention may be further incorporated with one or more additives, in addition to the neutralizer and surfactant described above, within limits not harmful to the object of the present invention, depending on purposes of the composition. These additives include dispersant, stabilizer, ultraviolet stabilizer, ultraviolet absorber, humectant, thickener, foaming agent, antifoaming agent, coagulant, gelling agent, antioxidant, softening agent, plasticizer, filler, lubricant, nucleating agent (clearing agent), antistatic agent, flame retardant, expanding agent, silicone oil and pigment.

The emulsion composition of the present invention, comprising the modified polypropylene, is useful for various purposes, e.g., paints, surface modifiers, primers, coating agents, inks, adhesives, tackifiers, solubilizers, of which the particularly preferable purposes are paints, surface modifiers, primers and coating agents.

### EXAMPLES

The present invention is described by EXAMPLES, which by no means limit the present invention.

The polymer was analyzed by the following evaluation procedures in EXAMPLES and COMPARATIVE EXAMPLES.

### Evaluation procedures

### (1) Determination of molecular weight

Molecular weight was determined by gel permeation chromatography (Waters, GPC Model 150) under the conditions of solvent: o-dichlorobenzene, measurement temperature: 135°C, solvent flow rate: 1.0 mL/minute, and column (Tosoh, TSK-GEL, GMH_{XL}-HT), where the polypropylene calibration curve was prepared by the Universal method with monodisperse polystyrene as the standard sample.

### (2) Determination of stereoregularity

Stereoregularity was determined by a ¹³C-NMR analyzer (Variant, Model XL-200 equipped with a PFT pulse Fourier converter) under the conditions of 50 MHz, 120°C, pulse width: 8.2 µs π/3, pulse intervals: 4 seconds, and integration cycles: 5000, where the polymer was dissolved in a mixed trichlorobenzene/benzene (2:1) solvent to prepare the sample.

### (3) Determination of quantity of hydrophilic functional group introduced (number of mols per mol of polypropylene)

Quantity of the compound having a hydrophilic functional group, introduced into polypropylene, was determined from the functional group content determined by an IR analyzer (JASCO, FT/IR-470) and from the number-average molecular weight determined using the GPC curve.S

### (4) Evaluation of emulsion composition

The emulsion was observed immediately and also 1 month after it was prepared, and evaluated according to the following standards, : ⊚ the polymer is uniformly dispersed (good dispersed condition/visually observed), : O the polymer partly floats but the emulsion becomes homogeneous immediately after it is lightly shaken, and : X the polymer is totally separated, and the emulsion cannot easily become homogeneous even when shaken strongly.

### EXAMPLE 1

### Polymerization of propylene

A stainless steel autoclave equipped with a stirrer, sufficiently purged with nitrogen, was charged with 150 mL of toluene and a 2 mols/L toluene solution of diethyl aluminum chloride, and then with 8.3 mols of propylene. The mixture was cooled to -78°C with stirring, in which 50 mL of 0.1 mols/L toluene solution of tris(2-methyl-1,3-butandionate) vanadium was put, to polymerize propylene. The polymerization was allowed to proceed for 1.5 hours, while the system temperature was kept at -78°C, and then stirring was stopped. The effluent solution was put in a 2L ethanol/hydrochloric acid solution kept at -78°C. The resulting polymer was washed 5 times with 1L of ethanol and dried at room temperature under a vacuum, to produce 5.5 g of the polymer.

It was found to have a weight-average molecular weight (Mw) of 6,000 and Mm/Mn ratio of 1.5 by the GPC analysis, and a [r] value of 0.79 by ¹³C-NMR analysis for stereoregularity. It was also found to have a solubility of 15 g or more in toluene at normal temperature.

### Modification of polypropylene

Next, 10 g of heptane was put in 3 g of the polypropylene prepared above, and the mixture was stirred by a stirrer at room temperature until the polypropylene was completely dissolved. Then, the heptane solution was bubbled with nitrogen for 20 minutes, in which 3.0 g of methacrylic acid and 0.15 g of t-butylperoxy-2-ethylhexanoate as a radical reaction initiator were put, and mixed with each other for 2 minutes. The reaction system was heated in an oil bath to 93°C, at which it was stirred for 3 hours. Then, the oil bath was removed, and 50 mL of heptane kept at room temperature was immediately put in the reaction system. The heptane solution was put in 600 mL of ethanol to precipitate the polypropylene. The precipitate was separated and dissolved in 150 mL of heptane. The heptane solution was put in a separatory funnel, in which 50 mL of ethanol was put. The funnel was vigorously shaken, and then allowed to stand to separate the solution into two phases. This procedure was repeated 3 times, and then the heptane phase was separated and sufficiently dried to recover the polymer.

The polymer was observed by the IR analysis to have an absorption peak at around 1710 cm⁻¹, due to carboxylic acid. It was estimated from intensity of the absorption peak that the polymer had 3.3 molecules of the methacrylic acid introduced per one chain. The polymer was also observed to have no absorption peak at 770, 842, 870, 998 or 1022 cm⁻¹ due to crystalline polypropylene.

### Dispersion and emulsification of modified polypropylene in water

First, 10 g of a 30% by mass toluene solution of the modified polypropylene was slowly put in 40 g of water at 150°C with stirring at 2000 rpm by a homogenizer. The stirring was continued for 3 minutes, and stopped. The resulting emulsion was put in another container, where it was heated to evaporate 35 g of the toluene/water mixture. The emulsion was observed immediately and also 1 month after it was prepared, to evaluate its stability. The results are given in Table 5.

### EXAMPLES 2 to 7

Propylene was polymerized under the conditions shown in Table 1 and modified with a varying modifier under the conditions shown in Table 3 in a manner similar to that for EXAMPLE 1.

Each of the modified polymers was analyzed by the IR analysis to quantitatively determine quantity of the modifier introduced and also to confirm that an absorption peak due to crystalline polypropylene was not observed. It was also emulsified in the same manner as in EXAMPLE 1. The emulsion was observed immediately and also 1 month after it was prepared, to evaluate its stability. The results are given in Table 5.

### EXAMPLE 8

Propylene was polymerized under the conditions given in Table 1. Then, 10 g of xylene was put in 3 g of the resulting polypropylene, and the mixture was stirred by a stirrer at room temperature until the polypropylene was completely dissolved. Then, the xylene solution was bubbled with nitrogen for 20 minutes. The reaction system was heated in an oil bath to 138°C in a nitrogen atmosphere, at which 2.0 g of acrylic acid and 0.15 g of t-butylperoxy-2-ethylhexanoate as a radical reaction initiator were put, each in 5 installments at intervals of 15 minutes in 1 hour. It was stirred on and on for 4 hours. Then, the oil bath was removed, and 50 mL of toluene kept at room temperature was immediately put in the reaction system. The toluene solution was put in 600 mL of methanol to precipitate the polypropylene. The precipitate was separated and dissolved in 150 mL of heptane. The heptane solution was put in a separatory funnel, in which 50 mL of ethanol was put. The funnel was vigorously shaken, and then allowed to stand to separate the solution into two phases. This procedure was repeated 3 times, and then the heptane phase was separated and sufficiently dried to recover the polymer.

The polymer was observed by the IR analysis to have an absorption peak at around 1710 cm⁻¹, due to carboxylic acid. It was estimated from intensity of the absorption peak that the polymer had 0.6 molecules of the acrylic acid introduced per one chain. The polymer was also observed to have no absorption peak at 770, 842, 870, 998 or 1022 cm⁻¹ due to crystalline polypropylene. Thus obtained modified polypropylene was dissolved in toluene. Methanol containing NaOH was put in the modified polypropylene as much as it could neutralize 30% of carboxylic acid, quantity of which was determined by the IR analysis. Then, the solution was emulsified in the same manner as in EXAMPLE 1. The emulsion was observed immediately and also 1 month after it was prepared, to evaluate its stability. The results are given in Table 5.

### EXAMPLE 9

The modified polypropylene was prepared in the same manner as in EXAMPLE 8, except under the conditions shown in Tables 1 and 2, and then neutralized with NH₃ and emulsified. The emulsion was observed immediately and also 1 month after it was prepared, to evaluate its stability. The results are given in Table 5.

### EXAMPLE 10

Propylene was polymerized under the conditions shown in Table 1. Next, 10 g of xylene was put in 3 g of the resulting polypropylene, and the mixture was stirred by a stirrer until the polypropylene was completely dissolved. Then, the xylene solution was bubbled with nitrogen for 20 minutes. The reaction system was heated in an oil bath to 138°C in a nitrogen atmosphere, at which 3.0 g of methylaminoethyl acrylate and 0.20 g of 2,5-dimethyl-2,5-di-t-butylperoxyhexane as a radical reaction initiator were put by a metering pump over 1 hour. Then, the reaction system was stirred continuously for 4 hours, and the oil bath was removed after a lapse of 10 hours. Immediately, 50 mL of xylene kept at room temperature was put in the reaction system. The xylene solution was put in 600 mL of methanol to precipitate the polypropylene. The precipitate was separated and dissolved in 150 mL of heptane. The heptane solution was put in a separatory funnel, in which 50 mL of ethanol was put. The funnel was vigorously shaken, and then allowed to stand to separate the solution into two phases. This procedure was repeated 3 times, and then the heptane phase was separated and sufficiently dried to recover the polymer.

The polymer was observed by the IR analysis to have an absorption peak at around 1740 cm⁻¹, due to the ester. It was estimated from intensity of the absorption peak that the polymer had 1.1 molecules of the methylaminoethyl acrylate introduced per one chain. The polymer was also observed to have no absorption peak at 770, 842, 870, 998 or 1022 cm⁻¹ due to crystalline polypropylene. The modified polypropylene was dissolved in toluene, in which methanol containing HCl was put to the extent for HCl to reach the same equivalent level as that of the amino group determined by the IR analysis. Then, the solution was emulsified in the same manner as in EXAMPLE 1. The emulsion was observed immediately and also 1 month after it was prepared, to evaluate its stability. The results are given in Table 5.

### EXAMPLE 11

Propylene was polymerized under the conditions shown in Table 1, and styrene was introduced into the resulting polypropylene in the same manner as in EXAMPLE 1, except under the conditions shown in Table 3. The resulting modified polypropylene was dried and dissolved in chloroform. The chloroform solution of the modified polypropylene was cooled to 0°C, in which chlorosulfonic acid was put, and the reaction was allowed to proceed at 0°C for 30 minutes. The solution was then neutralized with an ethanol solution of NaOH. The resulting polymer solution was put in methanol dropwise, to precipitate and recover the polymer.

Then, the polymer was dissolved in toluene and emulsified in the same manner as in EXAMPLE 1. The emulsion was observed immediately and also 1 month after it was prepared, to evaluate its stability. The results are given in Table 5.

### EXAMPLE 12

Propylene was polymerized in the same manner as in EXAMPLE 1, except under the conditions shown in Table 1, and a modifier (acrylic acid) was introduced into the resulting polypropylene under the conditions shown in Table 3.

The modified polymer was analyzed by the IR analysis to quantitatively determine quantity of the modifier introduced and also to confirm that an absorption peak due to crystalline polypropylene was not observed.

The modified polypropylene was emulsified in the same manner as in EXAMPLE 1. The emulsion was observed immediately and also 1 month after it was prepared, to evaluate its stability. The results are given in Table 5.

### EXAMPLE 13

Propylene was polymerized in the same manner as in EXAMPLE 1, except under the conditions shown in Table 1, and vinyl acetate was introduced into the resulting polypropylene under the conditions shown in Table 3. The resulting polypropylene modified with vinyl acetate was dissolved in toluene, in which a methanol solution of NaOH was put, and the reaction (saponification) was allowed to proceed at 40°C for 2 hours. The resulting polymer solution was put in methanol dropwise, to precipitate and recover the polymer.

The polymer was observed by the IR analysis to have an intense absorption peak of the OH group. It was dissolved in toluene, and emulsified in the same manner as in EXAMPLE 1. The emulsion was observed immediately and also 1 month after it was prepared, to evaluate its stability. The results are given in Table 5.

### EXAMPLES 14 and 15

In each of EXAMPLES 14 and 15, propylene was polymerized in the same manner as in EXAMPLE 1, except under the conditions shown in Table 1. The resulting polymer was incorporated with two different types of monomer and emulsified under the conditions shown in Table 3. The emulsion was observed immediately and also 1 month after it was prepared, to evaluate its stability. The results are given in Table 5.

### EXAMPLE 16

### Complexing of modifier containing active hydrogen with organoaluminum compound

A 1000 mL flask equipped with a stirrer, sufficiently purged with nitrogen, was charged with 400 mL of toluene and 1000 mmols of Al(i-C₄H₉)₂Cl. The mixture was cooled to -78°C with stirring, in which 500 mmols of hydroxyethyl methacrylate was put dropwise over 2 hours, while the reaction system was kept at -78°C. Then, the reaction system was slowly heated to room temperature with stirring.

### Living polymerization of propylene

A 2000 mL flask equipped with a stirrer, sufficiently purged with nitrogen, was charged with toluene and cooled to -78°C. It was then charged with 10 mols of propylene, which was dissolved in toluene while it was kept liquid. Then, a toluene solution dissolving 125 mmols of Al(i-C₄H₉)₂Cl, toluene solution dissolving 12.5 mmols of anisole and toluene solution dissolving 12.5 mmols of vanadium trisacetylacetonate were put in the reaction system. The liquid in the reaction system totaled 1250 mL. Stirring of the reaction system was started as soon as vanadium trisacetylacetonate was put therein, to start polymerization of propylene, which was continued for 2 hours while the system was kept at -78°C.

### Reaction between organoaluminum complex of hydroxyethyl methacrylate and living polypropylene

The propylene polymerization system, kept at -78°C, was incorporated with the organoaluminum complex of hydroxyethyl methacrylate prepared above, and the mixture was heated to -60°C, at which the reaction was allowed to proceed for 3 hours. Then, the reaction solution was put in 5 L of methanol, kept at -60°C, to separate the polymer out. The resulting polymer was washed 5 times with methanol and dried at room temperature.

The polymer was produced in a yield of 9.6 g. It had a GPC curve of single peak and weight-average molecular weight Mw of 21,000. It was close to a monodisperse system, having a Mw/Mn ratio of 1.1. The polymer was observed by the IR analysis to have an absorption peak at around 1740 cm⁻¹, due to the ester. It was estimated from intensity of the absorption peak that the polymer had 1.3 molecules of the methacrylic acid derivative introduced per one chain. The polymer was also observed to have no absorption peak at 770, 842, 870, 998 or 1022 cm⁻¹ due to crystalline polypropylene. The solution was emulsified in the same manner as in EXAMPLE 1. The emulsion was observed immediately and also 1 month after it was prepared, to evaluate its stability. The results are given in Table 5.

### EXAMPLE 17

### Complexing of modifier containing active hydrogen with organoaluminum compound

A 200 mL flask equipped with a stirrer, sufficiently purged with nitrogen, was charged with 80 mL of toluene and 110 mmols of Al(C₂H₅)₂Cl. The mixture was cooled to -78°C, in which 100 mmols of acrylic acid was put dropwise over 3 hours, while the reaction system was kept at -78°C. Then, the reaction system was slowly heated to room temperature with stirring.

### Living polymerization of propylene

A stainless steel autoclave equipped with a stirrer, sufficiently purged with nitrogen, was charged with 150 mL of toluene, 100 mL of 2 mols/L toluene solution of Al(C₂H₅)₂Cl and 8.3 mols of propylene. Then, the mixture was cooled to -60°C with stirring, in which 50 mL of a 0.1 mols/L toluene solution of tris(2-methyl-1,3-butandionate) vanadium was put while the system was kept at -60°C. The reaction was allowed to proceed for 3.0 hours to polymerize propylene.

### Reaction between organoaluminum complex of acrylic acid and living polypropylene

The propylene polymerization system, kept at -60°C, was incorporated with the organoaluminum complex of acrylic acid prepared above, and the reaction was allowed to proceed for 3 hours. Then, the reaction solution was put in 1 L of methanol, kept at -60°C, to separate the polymer out. The resulting polymer was washed 5 times with methanol and dried at room temperature.

The polymer was produced in a yield of 42 g. It had a GPC curve of single peak, and weight-average molecular weight Mw of 42,000 and Mw/Mn ratio of 1.3. The polymer was observed by the IR analysis to have an absorption peak at around 1710 cm⁻¹, due to carboxylic acid. It was estimated from intensity of the absorption peak that the polymer had 6.9 molecules of the acrylic acid introduced per one chain. The polymer was also observed to have no absorption peak at 770, 842, 870, 998 or 1022 cm⁻¹ due to crystalline polypropylene.

The solution was emulsified in the same manner as in EXAMPLE 1. The emulsion was observed immediately and also 1 month after it was prepared, to evaluate its stability. The results are given in Table 5.

### EXAMPLE 18

### Complexing of alkadienyl alcohol with organoaluminum compound

A 500 mL flask equipped with a stirrer, sufficiently purged with nitrogen, was charged with 150 mL of toluene and 220 mmols of Al(ᵢ-C₄H₉)₂Cl. The mixture was cooled to -40°C, in which 200 mmols of 2,7-octadiene-1-ol was put dropwise over 10 hours, while the reaction system was kept at -40°C. Then, the reaction system was slowly heated to room temperature with stirring.

### Copolymerization of organoaluminum complex of 2,7-octadiene-1-ol and propylene

A 2 L flask equipped with a stirrer, sufficiently purged with nitrogen, was charged with toluene and cooled to -48°C. It was then charged with 4.2 mols of propylene on same temperature, which was dissolved in toluene while it was kept liquid. Then, a toluene solution dissolving 50 mmols of Al(ᵢ-C₄H₉)₂Cl and toluene solution dissolving 5 mmols of anisole were put in the reaction system. The resulting solution was incorporated with a total quantity of the organoaluminum complex of 2,7-octadiene-1-ol prepared above, and a toluene solution dissolving 5 mmols of vanadium trisacetylacetonate. The liquid in the reaction system totaled 1 L. Stirring of the reaction system was started as soon as vanadium trisacetylacetonate was put therein, to start polymerization of propylene, which was continued for 2 hours while the system was kept at -48°C.

Then, the reaction solution was put in 2 L of methanol, kept at -60°C, to separate the polymer out. The resulting polymer was washed 5 times with methanol and dried at room temperature.

The polymer was produced in a yield of 6.1 g. It had a GPC curve of single peak, and weight-average molecular weight Mw of 18,000 and Mw/Mn ratio of 1.5.

The polymer was observed by the IR analysis to have a broad absorption peak at around 3200 to 3500 cm⁻¹, due to stretching vibration of the OH group and was also observed to have no absorption peak at 770, 842, 870, 998 or 1022 cm⁻¹ due to crystalline polypropylene. It was estimated by ¹H-NMR analysis that the polymer had 5.6 molecules of 2,7-octadiene-1-ol introduced per one chain. The solution was emulsified in the same manner as in EXAMPLE 1. The emulsion was observed immediately and also 1 month after it was prepared, to evaluate its stability. The results are given in Table 5.

### COMPARATIVE EXAMPLE 1

Propylene was polymerized in the same manner as in EXAMPLE 1, except under the conditions shown in Table 2, and a functional group was introduced into the resulting polypropylene under the conditions shown in Table 4. The resulting polymer was washed with acetone to prepare the modified polypropylene.

Next, 3 g of the modified polypropylene prepared above was dispersed in 27 g of toluene. The toluene dispersion of the modified polypropylene was slowly put in 120 g of water stirred at 20,000 rpm by a homogenizer, stirred for 3 minutes and put in another container, where it was heated to evaporate 135 g of the toluene/water mixture, to prepare the emulsion. The emulsion was observed immediately and also 1 month after it was prepared, to evaluate its stability. The results are given in Table 5.

### COMPARATIVE EXAMPLE 2

Propylene was polymerized, modified and emulsified in the same manner as in COMPARATIVE EXAMPLE 1, except under the conditions shown in Tables 2 and 4. The emulsion was observed immediately and also 1 month after it was prepared, to evaluate its stability. The results are given in Table 5.

### COMPARATIVE EXAMPLE 3

Propylene was polymerized in the same manner as in EXAMPLE 1, and treated under the reaction conditions shown in Table 4, where no modifier was incorporated. The resulting polymer was emulsified in the same manner as in EXAMPLE 1. The emulsion was observed immediately and also 1 month after it was prepared, to evaluate its stability. The results are given in Table 5.

### COMPARATIVE EXAMPLES 4 to 8

In each of COMPARATIVE EXAMPLES 4 to 8, propylene was polymerized under the same conditions as those for EXAMPLE 1, and a varying modifier was introduced into the polymer. The resulting modified polypropylene was emulsified in the same manner as in EXAMPLE 1. The emulsion was observed immediately and also 1 month after it was prepared, to evaluate its stability. The results are given in Table 5.

**[Table 1]**

| EXAMPLE | Catalyst (mmol) | Promoter (mmol) | Electron donor (mmol) | Temperature (°C) | Reaction time (h) | Yield (g) | Mw ×10⁻⁴ | Mw/Mn | [r] |
|---|---|---|---|---|---|---|---|---|---|
| 1 | V(mbd)₃/(5.0) | Al(C₂H₅)₂Cl/(200) | - | -78 | 1.5 | 5.5 | 0.6 | 1.5 | 0.79 |
| 2 | V(mbd)₃/(0.7) | Al(C₂H₅)₂Cl/(60) | Diisopropyl phthalate (12) | -60 | 8.0 | 46.0 | 13.0 | 1.4 | 0.80 |
| 3 | V(acac)₃/(5.0) | Al(C₂H₅)₂Cl/(250) | - | -78 | 3.0 | 9.4 | 2.6 | 1.1 | 0.81 |
| 4 | V(acac)₃/(5.0) | Al(C₂H₅)₂Cl/(50) | Methanol (5.0) | -78 | 15.0 | 43.0 | 10.0 | 1.1 | 0.79 |
| 5 | V(acac)₃/(10) | Al(C₂H₅)₂Br/(50) | - | -78 | 8.5 | 5.2 | 1.0 | 1.2 | 0.66 |
| 6 | V(acac)₃/(1.0) | Al(C₂H₅)_{1.5}Cl_{1.5}/(30) | - | -60 | 8.0 | 43.0 | 10.0 | 1.7 | 0.82 |
| 7 | V(acac)₃/(5.0) | Al(C₂H₅)Cl₂/(50) | - | -78 | 8.0 | 9.7 | 3.7 | 2.0 | 0.82 |
| 8 | VCl₄/(10.0) | Al(C₂H₅)₂Cl/(50) | Anisole (5.0) | -78 | 1.0 | 23.0 | 4.5 | 1.5 | 0.87 |
| 9 | VCl₄/(10.0) | Al(C₂H₅)₂Br/(50) | - | -78 | 15.0 | 8.7 | 0.7 | 2.0 | 0.65 |
| 10 | VCl₄/(10.0) | Al(C₂H₅)_{1.5}Cl_{1.5}/(50) | - | -78 | 2.5 | 57.0 | 2.6 | 1.7 | 0.83 |
| 11 | VOCl₃/(1.0) | Al(C₂H₅)_{1.5}Cl_{1.5}/(10) | - | -78 | 2.0 | 88.0 | 3.2 | 2.0 | 0.85 |
| 12 | Ti(OC₄H₉)₄/(5.0) | Al(C₂H₂)_{1.5}Cl_{1.5}/(60) | - | 21 | 8.0 | 34.0 | 2.5 | 1.9 | 0.32 |
| 13 | t-BuNSiMe₂FluTiMe_{2/}(0.002) | B(C₆F₅)₃/(0.004)+Al(n-C₈H₁₇)₂Cl/(0.04) | - | 40 | 1.0 | 9.6 | 8.6 | 1.6 | 0.75 |
| 14 | t-BuNSiMe₂FluTiMe₂/(0.001) | Dry-MMAO/(8.0) | - | 0 | 1.0 | 5.7 | 19.0 | 1.3 | 0.79 |
| 15 | V(mbd)₃/(0.7) | Al(C₂H₅)₂Cl/(60) | Diisopropyl phthalate (12) | -60 | 8.0 | 46.0 | 13.0 | 1.4 | 0.80 |
| 16 | V(acac)₃/(12.5) | Al(ᵢ-C₄H₉)₂Cl/(125) | Anisole (12.5) | -78 | 2.0 | 9.6 | 21.0 | 1.1 | 0.80 |
| 17 | V(mbd)₃/(5) | Al(C₂H₅)₂Cl/(200) | - | -60 | 3.0 | 42.0 | 4.2 | 1.3 | 0.80 |
| 18 | V(acac)₃/(5.0) | Al(ᵢ-C₄H₄)₂Cl/(50) | Anisole | -48 | 2.0 | 6.1 | 18.0 | 1.5 | 0.79 |

**[Table 2]**

| COMPARATIVE EXAMPLE | Catalyst (mmol) | Promoter (mmol) | Electron donor (mmol) | Temperature (°C) | Reaction time (h) time (h) | Yield (g) | Mw x10⁻⁴ x 10-4 | Mw/Mn | [r] |
|---|---|---|---|---|---|---|---|---|---|
| 1 | Me₂C(Cp,Flu)ZrMe₂/(0.001) | B(C₆F₅)₃/(0.004)+Al(n-C₈H₁₇)₂Cl/(0.04) | - | 60 | 2.0 | 4.3 | 9.4 | 1.8 | 0.94 |
| 2 | Ti catalyst supported by Mg | Al(C₂H₅)₃ | Silane compound | 70 | 1.0 | 190.0 | 14.0 | 5.7 | 0.09 |
| 3∼8 | Same polymerization conditions as those for EXAMPLE 1 | | | | | | | | |

**[Table 3]**

| EXAMPLE | Modifier / (g) | Radical reaction initiator / (g) | Solvent / (g) | Temperature (°C) | Reaction time (h) | Quantity introduced a) (mol/mol-PP) |
|---|---|---|---|---|---|---|
| 1 | Methacrylic acid (3.0) | t-butylperoxy-ethylhexanoate (0.15) | Heptane (10) | 93 | 3.0 | 3.3 |
| 2 | Hydroxyethyl acrylate (3.0) | t-butylperoxy-2-ethylhexanoate (0.15) | Decane (10) | 93 | 5.0 | 4.6 |
| 3 | Acrylamide (2.5) | 2,5-Dimethyl-2,5-di-t-butylperoxyhexane(0.05) | Xylene (15) | 136 | 2.0 | 1.5 |
| 4 | Polyethylene glycol acrylate (5.0) | t-butylperoxy-2-ethylhexanoate (0.10) | Hexane (10) | 60 | 3.0 | 5.5 |
| 5 | Acrylonitrile (1.5) | t-butylperoxy-2-ethylhexanoate (0.05) | Toluene (10) | 93 | 4.0 | 2.6 |
| 6 | Fumaric acid (5.0) | Azobisisobutylonitrile (0.50) | Hexane (10) | 60 | 5.0 | 8.6 |
| 7 | Acrylic acid (2.0) | t-butylperoxy-2-ethylhexanoate (0.15) | Toluene (15) | 106 | 4.0 | 3.5 |
| 8 | Acrylic acid (2.0), neutralized with NaOH(30%) | t-butylperoxy-2-ethylhexanoate (0.15) | Xylene (10) | 138 | 4.0 | 0.6 |
| 9 | Acrylic acid (2.0), neutralized with NH3 (30%) | t-butylperoxy-2-ethylhexanoate (0.15) | Xylene (10) | 106 | 5.0 | 1.9 |
| 10 | Methylaminoethyl acrylate (3.0), neutralized with HCl | 2,5-Dimethyl-2,5-di-t-butylperoxyhexane (0.20) | Xylene (10) | 138 | 10.0 | 1.1 |
| 11 | Styrene (1.0), sulfonated | t-butylperoxy-2-ethylhexanoate (0.05) | Toluene (15) | 60 | 4.0 | 3.2 |
| 12 | Acrylic acid (5) | t-butylperoxy-2-ethylhexanoate (1) | Decane (15) | 106 | 2.0 | 6.1 |
| 13 | Vinyl acetate (5.0), saponified | t-butylperoxy-2-ethylhexanoate (0.50) | Toluene (15) | 93 | 3.0 | 2.1 |
| 14 | Methacrylic acid (2.5) / isobutyl methacrylate (2.0) | t-butylperoxy-2-ethylhexanoate (0.15) | Toluene (15) | 93 | 10.0 | 4.3 |
| 15 | Acrylic acid (1.0) / butanediol diacrylate (2.0) | t-butylperoxy-2-ethylhexanoate (0.10) | Toluene (10) | 93 | 4.0 | 2.5 |
| 16 | Hydroxyethyl methacrylate | - | Toluene | -60 | 3.0 | 1.3 |
| 17 | Acrylic acid | - | Toluene | -60 | 3.0 | 6.9 |
| 18 | 2,7-Octadiene-1-ol | - | Toluene | -48 | 2.0 | 5.6 |

| | | | | | | |
|---|---|---|---|---|---|---|
| a) : Quantity of polypropylene introduced (mols) per mol of polypropylene | | | | | | |

**[Table 4]**

| COMPARATIVE EXAMPLE | Modifier/ (g) | Radical reaction initiator / (g) | Solvent / (g) | Temperature (°C) | Reaction time(h) | Quantity introduced a) (mol/mol-PP) |
|---|---|---|---|---|---|---|
| 1 | Acrylic acid (2.0) | 2,5-Dimethyl-2,5-di-t-butylperoxyhexane (0.05) | Decane (200) | 174 | 5.0 | 1.8 |
| 2 | Hydroxyethyl acrylate (3.0) | 2,5-Dimethyl-2,5-di-t-butylperoxyhexane (0.05) | Decane (200) | 174 | 5.0 | 1.4 |
| 3 | - | 2,5-Dimethyl-2,5-di-t-butylperoxyhexane (0.05) | Toluene (10) | 138 | 5.0 | ∼0 |
| 4 | Methacrylic acid (0.3) | t-butylperoxy-2-ethylhexanoate (0.10) | Toluene (10) | 106 | 8.0 | 0.4 |
| 5 | Polyethylene glycol acrylate (3.0) | Azobisisobutylonitrile (0.05) | Heptane (20) | 60 | 5.0 | 0.3 |
| 6 | Methyl methacrylate (2.5) | t-butylperoxy-2-ethylhexanoate (0.15) | Toluene (10) | 93 | 4.0 | 1.8 |
| 7 | Styrene (1.5) | t-butylperoxy-2-ethylhexanoate (0.20) | Heptane (10) | 93 | 5.0 | 2.1 |
| 8 | Vinyl acetate (5.0) | t-butylperoxy-2-ethylhexanoate (0.50) | Toluene (15) | 93 | 3.0 | 2.1 |

| | | | | | | |
|---|---|---|---|---|---|---|
| a) : Quantity of polypropylene introduced (mols) per mol of polypropylene | | | | | | |

**[Table 5]**

| Sample No. | Conditions of just-prepared emulsion | Stability of emulsion (emulsion conditions 1 month after the preparation) |
|---|---|---|
| EXAMPLE 1 | Well dispersed | ⊚ |
| EXAMPLE 2 | Well dispersed | ⊚ |
| EXAMPLE 3 | Well dispersed | ○ |
| EXAMPLE 4 | Well dispersed | ⊚ |
| EXAMPLE 5 | Well dispersed | ○ |
| EXAMPLE 6 | Well dispersed | ⊚ |
| EXAMPLE 7 | Well dispersed | ⊚ |
| EXAMPLE 8 | Well dispersed | ⊚ |
| EXAMPLE 9 | Well dispersed | ⊚ |
| EXAMPLE 10 | Well dispersed | ⊚ |
| EXAMPLE 11 | Well dispersed | ⊚ |
| EXAMPLE 12 | Well dispersed | ⊚ |
| EXAMPLE 13 | Well dispersed | ⊚ |
| EXAMPLE 14 | Well dispersed | ○ |
| EXAMPLE 15 | Well dispersed | ○ |
| EXAMPLE 16 | Well dispersed | ○ |
| EXAMPLE 17 | Well dispersed | ○ |
| EXAMPLE 18 | Well dispersed | ○ |
| COMPARATIVE EXAMPLE 1 | Insufficiently dispersed | × |
| COMPARATIVE EXAMPLE 2 | Insufficiently dispersed | × |
| COMPARATIVE EXAMPLE 3 | Separated, polymer film formed | × |
| COMPARATIVE EXAMPLE 4 | Well dispersed | × |
| COMPARATIVE EXAMPLE 5 | Well dispersed | × |
| COMPARATIVE EXAMPLE 6 | Separated, polymer film formed | × |
| COMPARATIVE EXAMPLE 7 | Insufficiently dispersed | × |
| COMPARATIVE EXAMPLE 8 | Insufficiently dispersed | × |

It is found, based on the results of EXAMPLES 1 to 18, that the emulsion composition of the present invention, prepared by modifying polypropylene having a racemic diad fraction [r] of 0.12 to 0.88 to have at least 0.5 hydrophilic functional groups on the average and dispersing the modified polypropylene in water, shows high emulsion stability.

By contrast, the emulsion composition prepared in COMPARATIVE EXAMPLES 1 and 2 show insufficient emulsion stability, because polypropylene as the base polymer has a racemic diad fraction [r] below 0.12 or above 0.88, although it is modified to have at least 0.5 hydrophilic functional groups on the average. Moreover, the emulsion composition prepared in COMPARATIVE EXAMPLES 3 to 8 also show insufficient emulsion stability, because polypropylene as the base polymer has no hydrophilic functional group or has less than 0.5 groups on the average.

The emulsion composition of the present invention is highly stable to find various purposes, e.g., paints, surface modifiers, primers, coating agents, inks, adhesives, solubilizers and intermediates therefore, and is of very high industrial value.

## Claims

1. An emulsion composition of modified polypropylene dispersed and emulsified in water, **characterized in that** the modified polypropylene has a racemic diad fraction [r] of 0.51 to 0.88 and contains 0.5 or more hydrophilic functional groups on the average per one molecular chain of the polypropylene.

2. The emulsion composition of modified polypropylene according to Claim 1, wherein the polypropylene has a solubility of 5 g or more in toluene at normal temperature.

## Patentansprüche

1. Emulsionszusammensetzung von modifiziertem Polypropylen, das in Wasser dispergiert und emulgiert ist, **dadurch gekennzeichnet, daß** das modifizierte Polypropylen einen Anteil an racemischen Diaden [r] von 0.51 bis 0.88 aufweist und durchschnittlich 0.5 oder mehr hydrophile funktionelle Gruppen pro Molekülkette des Polypropylens enthält.

2. Emulsionszusammensetzung von modifiziertem Polypropylen nach Anspruch 1, wobei das Polypropylen bei Normaltemperatur eine Löslichkeit von 5 g oder mehr in Toluol aufweist.

## Revendications

1. Une composition d'émulsion de polypropylène modifié dispersé et émulsifié dans de l'eau, **caractérisée en ce que** le polypropylène modifié a une fraction racémique diade [r] de 0,51 à 0,88 et contient 0,5 ou plus groupes fonctionnels hydrophiles en moyenne par chaîne moléculaire de polypropylène.

2. La composition d'émulsion de polypropylène modifié selon la revendication 1, dans lequel le polypropylène a une solubilité de 5 g ou plus dans le toluène à température normale.
